(19) **Europäisches Patentamt / European Patent Office / Office européen des brevets**

(11) **EP 4 503 810 A1**

(12) **EUROPEAN PATENT APPLICATION**
published in accordance with Art. 153(4) EPC

(43) Date of publication:
**05.02.2025 Bulletin 2025/06**

(21) Application number: **22935348.7**

(22) Date of filing: **30.03.2022**

(51) International Patent Classification (IPC):
**H04W 72/0453** *(2023.01)* **H04W 4/40** *(2018.01)*

(52) Cooperative Patent Classification (CPC):
**H04W 4/40; H04W 72/0453**

(86) International application number:
**PCT/JP2022/016343**

(87) International publication number:
**WO 2023/188203 (05.10.2023 Gazette 2023/40)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **NTT DOCOMO, INC.**
**Tokyo 100-6150 (JP)**

(72) Inventors:
• **SHIBAIKE, Naoya**
**Tokyo 100-6150 (JP)**
• **YOSHIOKA, Shohei**
**Tokyo 100-6150 (JP)**
• **NAGATA, Satoshi**
**Tokyo 100-6150 (JP)**

(74) Representative: **Hoffmann Eitle**
**Patent- und Rechtsanwälte PartmbB**
**Arabellastraße 30**
**81925 München (DE)**

(54) **TERMINAL AND COMMUNICATION METHOD**

(57)    A terminal includes: a control unit configured to identify, based on a parameter specifying information related to a resource in a frequency domain, a configuration of a resource pool in an unlicensed band; a reception unit configured to receive a signal from another terminal in the resource pool; and a transmission unit configured to transmit a signal to the another terminal in the resource pool, and, in this terminal, the control unit configures an intra-cell guard band in the resource pool based on the parameter.

FIG.11

EP 4 503 810 A1

## Description

Technical Field

The present invention relates to a terminal and a communication method in a wireless communication system.

Background Art

In long term evolution (LTE) and a succeeding system of LTE (for example, LTE Advanced (LTE-A) and new radio (NR) (also referred to as 5G)), a device to device (D2D) technology in which terminals perform direct communication without passing through a base station has been discussed (for example, Non Patent Literature 1).

D2D reduces traffic between the terminal and the base station, and enables communication between the terminals even when the base station becomes incommunicable at the time of disaster or the like. Note that, in the 3rd generation partnership project (3GPP), D2D is referred to as "sidelink", but in the present specification, D2D, which is a more general term, is used. However, the term sidelink is also used as necessary in the description of the embodiment to be described later.

D2D communication is roughly divided into D2D discovery (also referred to as D2D discovery, D2D discovery) for discovering other communicable terminals and D2D communication (also referred to as D2D direct communication, D2D communication, device-to-device direct communication, and the like) for performing direct communication between the terminals. Hereinafter, the D2D communication, the D2D discovery, and the like are simply referred to as D2D when not particularly distinguished from each other. Further, a signal transmitted and received in D2D is referred to as a D2D signal. Various use cases of services related to vehicle to everything (V2X) in NR have been discussed (for example, Non Patent Literature 2).

In addition, in NR release 17, the use of a frequency band higher than that in a conventional release (for example, Non Patent Literature 3) is considered. For example, an applicable numerology including a sub-carrier spacing, a channel bandwidth, and the like, a design of a physical layer, a failure assumed in actual wireless communication, and the like in a frequency band from 52.6 GHz to 71 GHz have been considered.

Citation List

Non Patent Literature

Non Patent Literature 1: 3GPP TS 38.211 V16.8.0 (2021-12)
Non Patent Literature 2: 3GPP TR 22.886 V15.1.0 (2017-03)
Non Patent Literature 3: 3GPP TS 38.306 V16.7.0 (2021-12)
Non Patent Literature 4: 3GPP TS 37.213 V16.7.0 (2021-12)
Non Patent Literature 5: 3GPP TS 38.331 V16.7.0 (2021-12)
Non Patent Literature 6: 3GPP TS 38.214 V16.8.0 (2021-12)
Non Patent Literature 7: 3GPP TS 38.101-1 V16.10.0 (2021-12)
Non Patent Literature 8: 3GPP TS 38.321 V16.7.0 (2021-12)

Summary of Invention

Technical Problem

In a newly operated frequency band using a higher frequency than that of a conventional frequency band, an unlicensed band is defined. In the unlicensed band, various regulations are set, and for example, listen before talk (LBT) is executed for channel access. When D2D communication is performed in the high frequency band, an operation conforming to the regulation in the unlicensed band is required.

The present invention has been made in view of the above-described points, and an object of the present invention is to execute device-to-device direct communication that satisfies specifications in an unlicensed band.

Solution to Problem

According to the disclosed technology, there is provided a terminal including: a control unit configured to identify, based on a parameter specifying information related to a resource in a frequency domain, a configuration of a resource pool in an unlicensed band; a reception unit configured to receive a signal from another terminal in the resource pool; and a transmission unit configured to transmit a signal to the another terminal in the resource pool, and, in this terminal, the control unit configures an intra-cell guard band in the resource pool based on the parameter.

Advantageous Effects of Invention

According to the disclosed technology, it is possible to execute device-to-device direct communication satisfying specifications in an unlicensed band.

Brief Description of Drawings

[Fig. 1] Fig. 1 is a diagram illustrating V2X.
[Fig. 2] Fig. 2 is a diagram illustrating an example of a frequency range according to an embodiment of the present invention.
[Fig. 3] Fig. 3 is a diagram illustrating an example of a wireless LAN channel.
[Fig. 4] Fig. 4 is a diagram illustrating an example (1) of LBT.
[Fig. 5] Fig. 5 is a diagram illustrating an example (2) of LBT.
[Fig. 6] Fig. 6 is a diagram illustrating an example (3) of LBT.
[Fig. 7] Fig. 7 is a diagram illustrating an example (1) of specifications related to a frequency domain of LBT.
[Fig. 8] Fig. 8 is a diagram illustrating an example (2) of specifications related to the frequency domain of LBT.
[Fig. 9] Fig. 9 is a diagram illustrating an example (3) of specifications related to the frequency domain of LBT.
[Fig. 10] Fig. 10 is a diagram illustrating an example (4) of specifications related to the frequency domain of LBT.
[Fig. 11] Fig. 11 is a diagram illustrating an example of a guard band.
[Fig. 12] Fig. 12 is a diagram illustrating an example of LBT according to an embodiment of the present invention.
[Fig. 13] Fig. 13 is a diagram illustrating an example of a sidelink according to an embodiment of the present invention.
[Fig. 14] Fig. 14 is a diagram illustrating an example of a guard band according to an embodiment of the present invention.
[Fig. 15] Fig. 15 is a diagram illustrating an example of LBT in the sidelink according to an embodiment of the present invention.
[Fig. 16] Fig. 16 is a diagram illustrating an example of a functional configuration of a base station 10 according to an embodiment of the present invention.
[Fig. 17] Fig. 17 is a diagram illustrating an example of a functional configuration of a terminal 20 according to an embodiment of the present invention.
[Fig. 18] Fig. 18 is a diagram illustrating an example of a hardware configuration of the base station 10 or the terminal 20 according to an embodiment of the present invention.
[Fig. 19] Fig. 19 is a diagram illustrating an example of a configuration of a vehicle 2001 according to an embodiment of the present invention.

Description of Embodiments

Hereinafter, an embodiment of the present invention will be described with reference to the drawings. Note that the embodiment described below is an example, and the embodiment to which the present invention is applied is not limited to the following embodiment.

In an operation of a wireless communication system of an embodiment of the present invention, an existing technology is appropriately used. The existing technology is, for example, existing LTE, but the present invention is not limited to the existing LTE. In addition, the term "LTE" used in the present specification has a broad meaning including LTE-Advanced, systems subsequent to LTE-Advanced (for example, NR), and a wireless local area network (LAN), unless otherwise specified.

In an embodiment of the present invention, a duplex system may be a time division duplex (TDD) system, a frequency division duplex (FDD) system, or other systems (for example, flexible duplex and the like).

In addition, in an embodiment of the present invention, meaning of a radio parameter or the like being "set (configured)" may indicate that a predetermined value is configured in advance (pre-configured), or that a radio parameter indicated by a base station 10 or a terminal 20 is configured.

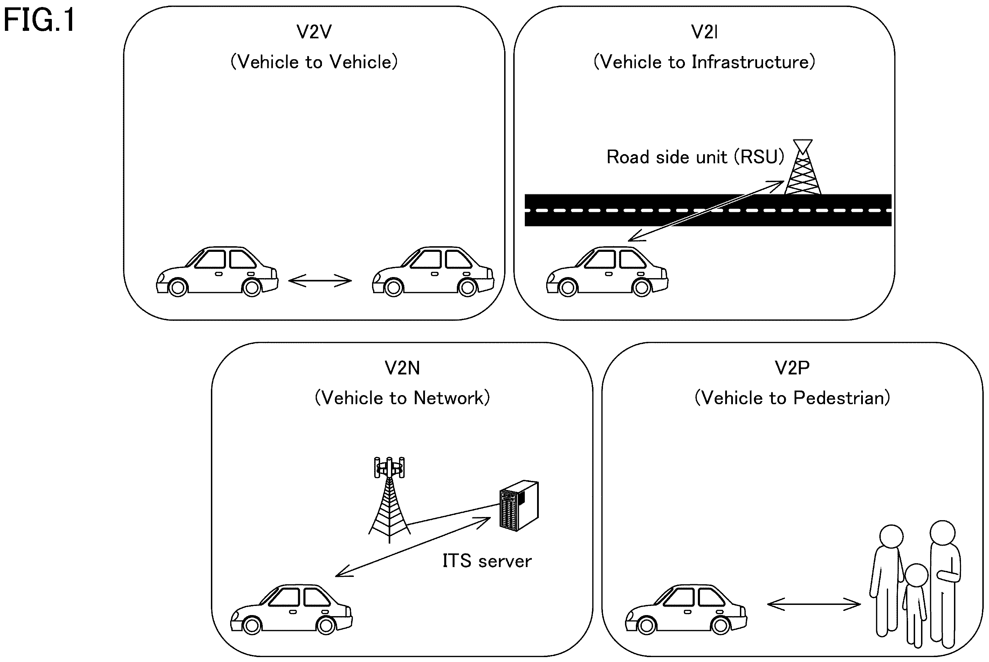

Fig. 1 is a diagram illustrating V2X. In 3GPP, realization of vehicle to everything (V2X) or enhanced V2X (eV2X) by extending a D2D function has been discussed, and technical specifications have been developed. As illustrated in Fig. 1, V2X is a part of intelligent transport systems (ITS), and is a generic name of vehicle to vehicle (V2V) meaning a communication form performed between vehicles, vehicle to infrastructure (V2I) meaning a communication form performed between a vehicle and a road-side unit (RSU) installed beside a road, vehicle to network (V2N) meaning a communication form performed between a vehicle and an ITS server, and vehicle to pedestrian (V2P) meaning a communication form performed between a vehicle and a mobile terminal possessed by a pedestrian.

In addition, in 3GPP, V2X using LTE or NR cellular communication and device-to-device communication has been discussed. V2X using cellular communication is also referred to as cellular V2X. In V2X of NR, studies to realize a large capacity, a low delay, high reliability, and quality of service (QoS) control are in progress.

Regarding V2X of LTE or NR, it is expected that the discussions will go beyond the development of the 3GPP technical specifications in the future. For example, it is expected that discussions will be held on achieving interoperability, reducing costs by implementation of an upper layer, a method of using a plurality of radio access technologies (RATs) in parallel or switching between the plurality of RATs, regulatory compliance in each country, and a method of acquiring, distributing, managing a database of, and using data of an LTE or NR V2X platform.

In the embodiment of the present invention, a use case in which a communication device is mounted on a vehicle is mainly assumed, but the embodiment of the present invention is not limited to such use case. For example, the communication device may be a terminal carried by a person, the communication device may be a device mounted on a drone or an aircraft, or the communication device may be a base station, an RSU, a relay station (a relay node), a terminal having a scheduling capability, or the like.

Note that sidelink (SL) may be distinguished from uplink (UL) or downlink (DL) based on either or a combination of the following 1) to 4). Further, SL may have another name.

1) Resource allocation in time domain
2) Resource allocation in frequency domain
3) Synchronization signal to be referred to (including sidelink synchronization signal (SLSS))
4) Reference signal used for path loss measurement for transmission power control

In addition, regarding orthogonal frequency division multiplexing (OFDM) of SL or UL, any one of cyclic-prefix OFDM (CP-OFDM), discrete Fourier transform-spread-OFDM (DFT-S-OFDM), OFDM without transform precoding, and OFDM with transform precoding may be applied.

In the SL of LTE, Mode 3 and Mode 4 are defined regarding resource allocation of the SL to the terminal 20. In Mode 3, transmission resources are dynamically allocated by downlink control information (DCI) transmitted from the base station 10 to the terminal 20. In Mode 3, semi persistent scheduling (SPS) is also possible. In Mode 4, the terminal 20 autonomously selects a transmission resource from a resource pool.

A slot in the embodiment of the present invention may be replaced with a symbol, a mini-slot, a sub-frame, a radio frame, or a transmission time interval (TTI). In addition, a cell in the embodiment of the present invention may be replaced with a cell group, a carrier component, a BWP, a resource pool, a resource, a radio access technology (RAT), a system (including a wireless LAN), or the like.

Note that, in the embodiment of the present invention, the terminal 20 is not limited to a V2X terminal, and may be any type of terminal that performs D2D communication. For example, the terminal 20 may be a terminal such as a smartphone carried by a user, or may be an Internet of Things (IoT) device such as a smart meter.

3GPP Release 16 or Release 17 sidelink is specified in the technical specifications for 1) and 2) described below.
1) Environment in which only 3GPP terminals exist in an intelligent transport systems (ITS) band
2) Environment in which UL resources are available to SL in license bands of frequency range 1 (FR1) and frequency range 2 (FR2) defined in NR

It has been discussed that an unlicensed band will be a new target of sidelink after 3GPP Release 18. For example, the newly targeted unlicensed band is an unlicensed band such as a 5 GHz to 7GHz band or a 60 GHz band.

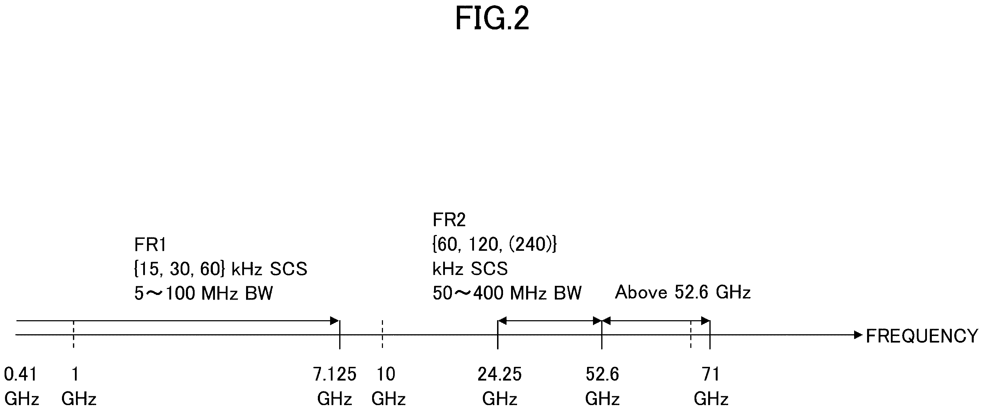

Fig. 2 is a diagram illustrating an example of a frequency range according to the embodiment of the present invention. In the NR specification of 3GPP Release 17, for example, an operation in a frequency band of 52.6 GHz or more is being discussed. Note that, as illustrated in Fig. 2, FR1 defined for the current operation is a frequency band from 410 MHz to 7.125 GHz, the sub carrier spacing (SCS) is 15, 30, or 60 kHz, and the bandwidth is from 5 MHz to 100 MHz. FR2 is a frequency band from 24.25 GHz to 52.6 GHz, the SCS is 60, 120, or 240 kHz, and the bandwidth is 50 MHz to 400 MHz. For example, a newly operated frequency band may be expected to be from 52.6 GHz to 71 GHz.

For example, as an example of the unlicensed band in the 5 GHz to 7GHz band, 5.15 GHz to 5.35 GHz, 5.47 GHz to 5.725 GHz, 5.925 GHz or more, and the like are expected.

For example, as an example of the unlicensed band in the 60 GHz band, 59 GHz to 66 GHz, 57 GHz to 64 GHz or 66 GHz, 59.4 GHz to 62.9 GHz, and the like are expected.

In the unlicensed band, various regulations are set in order not to affect other systems or other devices.

For example, listen before talk (LBT) is executed for channel access in the 5 GHz to 7 GHz band. The base station 10 or the terminal 20 performs power detection in a predetermined period immediately before performing transmission, and stops transmission when the power exceeds a certain value, that is, when detecting transmission of another device. In addition, a maximum channel occupancy time (MCOT) is defined. The MCOT is a maximum time period during which transmission is allowed to be continued when the transmission is started after LBT, and is, for example, 4 ms in Japan. In addition, as an occupied channel bandwidth (OCB) requirement, X% or more of the band needs to be used when transmission is performed using a certain carrier bandwidth. For example, in Europe, it is required to use 80% to 100% in a nominal channel bandwidth (NCB). The OCB requirement is intended to ensure that power detection of channel access is performed correctly. Regarding maximum transmission power and maximum power spectral density, it is specified that transmission is performed at predetermined transmission power or less. For example, in Europe, 23 dBm is the maximum transmission power in a 5,150 MHz to 5,350 MHz band. In addition, for example, in Europe, the maximum power spectral density is 10 dBm/MHz in the 5,150 MHz to 5,350 MHz band.

For example, LBT is executed at the time of channel access in the 60 GHz band. The base station 10 or the terminal 20 performs power detection in a predetermined period immediately before performing transmission, and stops transmission when the power exceeds a certain value, that is, when detecting transmission of another device. Regarding the maximum transmission power and the maximum power spectral density, it is specified that transmission is performed at predetermined transmission power or less. It is also specified to have a capability to meet the OCB requirement.

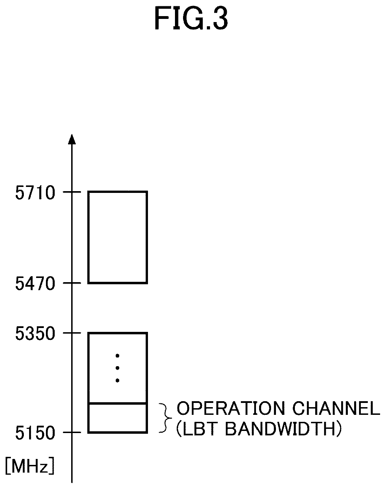

Fig. 3 is a diagram illustrating an example of a wireless LAN channel. A nominal center frequency $f_c$ of the wireless LAN channel in the 5 GHz band may be specified by the following formula, as shown in Fig. 3.

$$f_c = 5160 + (g \times 20) \text{ MHz, where } 0 \leq g \leq 9 \text{ or } 16 \leq g \leq 27$$

The nominal channel bandwidth is a maximum bandwidth including a guard band allocated to a single channel, and may be 20 MHz. The bandwidth allocated to a single channel to be operated may be an LBT bandwidth.

Note that an occupied channel bandwidth (OCB) may be defined as a bandwidth including 99% of signal power.

In NR, four types of channel access procedures described below are defined based on a difference in behavior of time reporting of LBT (period during which sensing is performed).

Type 1) Variable time sensing is executed before transmission. Type 1 is also referred to as category-4 LBT.

Type 2A) 25 μs sensing is executed before transmission. Type 2A is also referred to as category-2 LBT.

Type 2B) 16 μs sensing is executed before transmission. Type 2B is also referred to as category-2 LBT.

Type 2C) Transmission starts without performing LBT. Type 2C is similar to transmission in the licensed band.

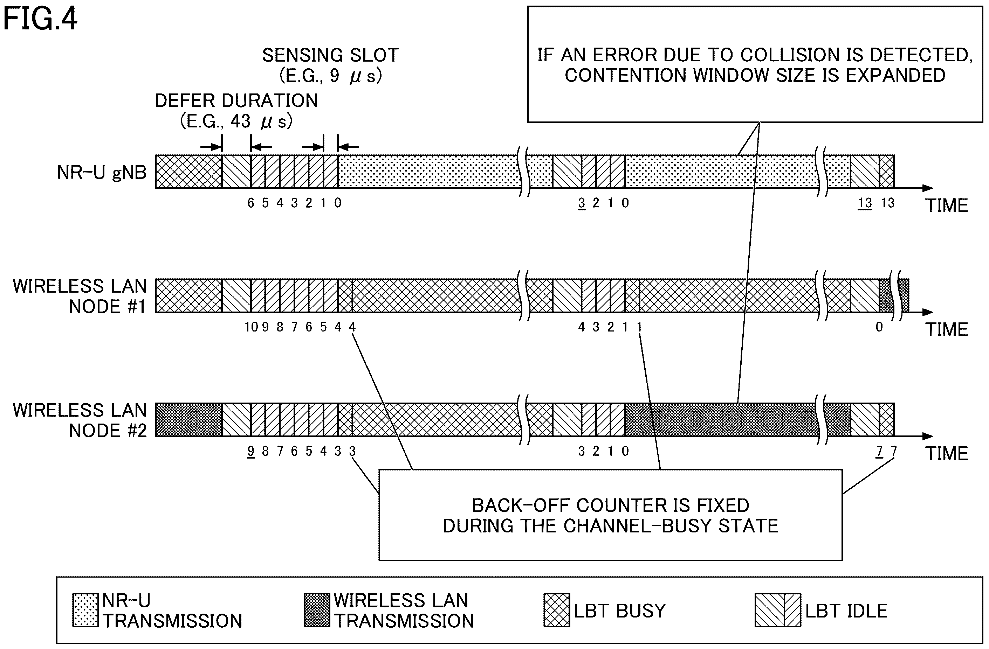

Fig. 4 is a diagram illustrating an example (1) of LBT. Fig. 4 is an example of a channel access procedure of Type 1. Type 1 is further classified into four classes indicating a channel access priority class based on a difference in sensing length. Sensing is executed in the following two periods of time.

A first period is a prioritization period or a defer duration and has a length of $16 + 9 \times m_p [\mu s]$. A fixed value of $m_p$ is defined for each channel access priority class.

A second period is a backoff procedure and has a length of $9 \times N[us]$. The value of N is randomly determined from a certain range (refer to Non Patent Literature 4).

In the above description, the 9 μs sensing period may be referred to as a sensing slot period.

In the example of Fig. 4, $m_p = 3$, and a defer duration is 43 μs. As illustrated in Fig. 4, a backoff counter is fixed during the channel-busy state. In addition, as illustrated in Fig. 4, when the transmission of NR-U gNB and the transmission of wireless LAN node #2 collide with each other and an error is detected, a contention window size is increased from 3 to 13 in the NR-U gNB.

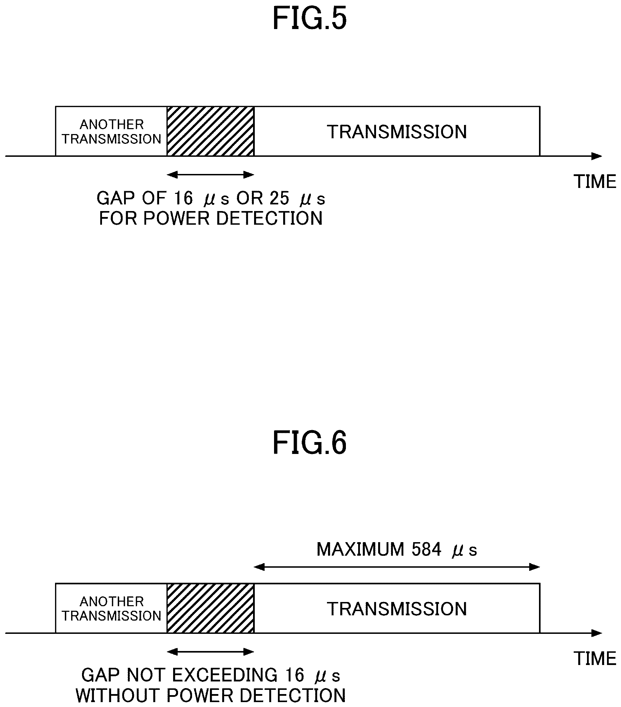

Fig. 5 is a diagram illustrating an example (2) of LBT. Fig. 5 is an example of the channel access procedure of Type 2A or Type 2B without random backoff. A gap for performing power detection of 25 μs for Type 2A or 16 μs for Type 2B is configured before transmission.

Fig. 6 is a diagram illustrating an example (3) of LBT. Fig. 6 is an example of the channel access procedure of Type 2C. As illustrated in Fig. 6, no power detection is performed before transmission, and after a gap not exceeding 16 μs, transmission is performed immediately. The transmission period may be up to 584 μs.

As described above, the sensing period in the backoff procedure at the time of Type 1 channel access procedure is randomly determined from a certain specific range {0..CW}. One value of CW is determined from a range of CWmin (minimum CW) to CWmax (maximum CW) in the following Table 1 based on a contention window size (CWS) adjustment procedure defined in Non Patent Literature 4.

[Table 1]

| Class# | $m_p$ | Minimum CW | Maximum CW | Maximum COT | Minimum deferral duration in total | Maximum deferral duration in total |
|--------|-------|------------|------------|-------------|-----------------------------------|-----------------------------------|
| 1 | 1 | 3 | 7 | 2 ms | 52 μs | 88 μs |
| 2 | 1 | 7 | 15 | 3/4 ms | 88 μs | 160 μs |
| 3 | 3 | 15 | 63/1023 | 8 ms | 178 μs | 610/9250 μs |
| 4 | 7 | 15 | 1023 | 8 ms | 214 μs | 9286 μs |

As shown in Table 1, different values of the minimum CW and the maximum CW are defined for each channel access priority class. As the class number is higher, a larger value is defined for the minimum CW and the maximum CW. Therefore, the higher the class number, the lower the possibility of collision with another device, and the longer the time required for the channel access procedure. On the other hand, the lower the class number, the higher the possibility of collision with another device, and the shorter the time required for the channel access procedure.

The maximum COT shown in Table 1 is the maximum channel occupancy time.

Note that, regarding a/b in Table 1, a indicates a value for the gNB and b indicates a value for the UE.

In a CWS adjustment procedure, an initial value of CW is configured to be the minimum CW. The value of CW is increased based on a decoding result of the past PDSCH transmission or PUSCH transmission.

A bandwidth of a channel for performing sensing for a certain LBT (LBT bandwidth) may be fixed to 20 MHz. Before transmission using a broadband exceeding 20 MHz, any one of the multi-channel access procedures defined in Non Patent Literature 4 described below may be executed.

Type A multi-channel access) The channel access procedure (LBT) is operated separately for each 20 MHz band. Type A multi-channel access is divided into Type A1 and Type A2. In Type A1, CW is independently determined for each channel. In Type A2, the maximum number of CWs among the channels that a device intends to use is determined.

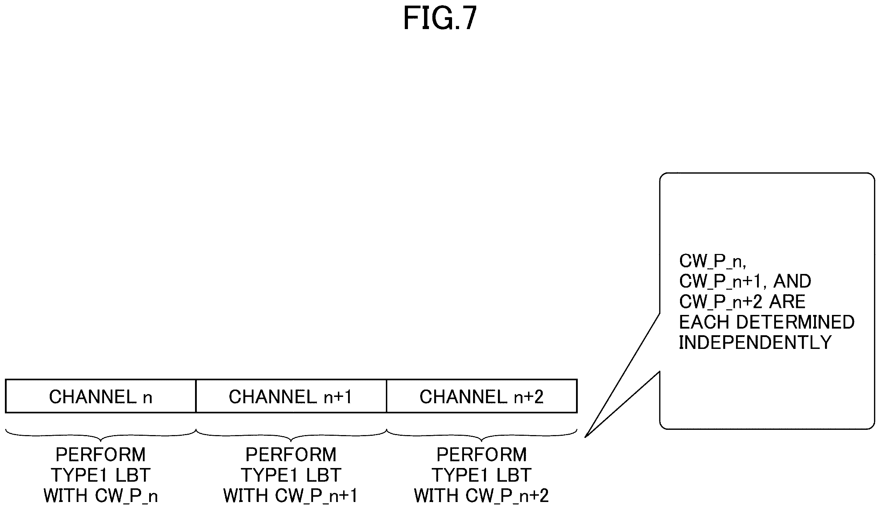

Fig. 7 is a diagram illustrating an example (1) of specifications related to a frequency domain of LBT. Fig. 7 is an example illustrating a method of determining CW of Type A1. CW_P_n of a channel n, CW_P_n+1 of a channel n+1, and CW_P_n+2 of a channel n+2 are independently determined.

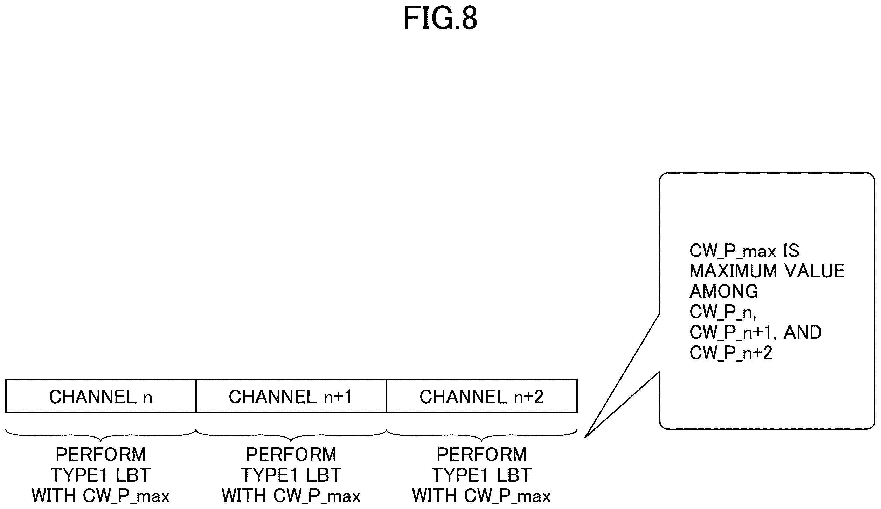

Fig. 8 is a diagram illustrating an example (2) of specifications related to the frequency domain of LBT. Fig. 8 is an example illustrating the method of determining CW of Type A1. A maximum value among CW_P_n of the channel n, CW_P_n+1 of the channel n+1, and CW_P_n+2 of the channel n+2 is determined as CW_P_max, and Type 1 LBT is performed on each channel by using CW P max.

Type B multi-channel access) A certain 1 LBT bandwidth (20 MHz) is selected as a primary channel, and Type 1 channel access procedure is operated for the primary channel. Next, Type 2A channel access procedure is operated for another channel to be used. Type B multi-channel access is further divided into Type B1 and Type B2. In Type B1, a single CW is maintained on a plurality of channels that a device intends to use. In Type B2, CW is maintained independently in each channel.

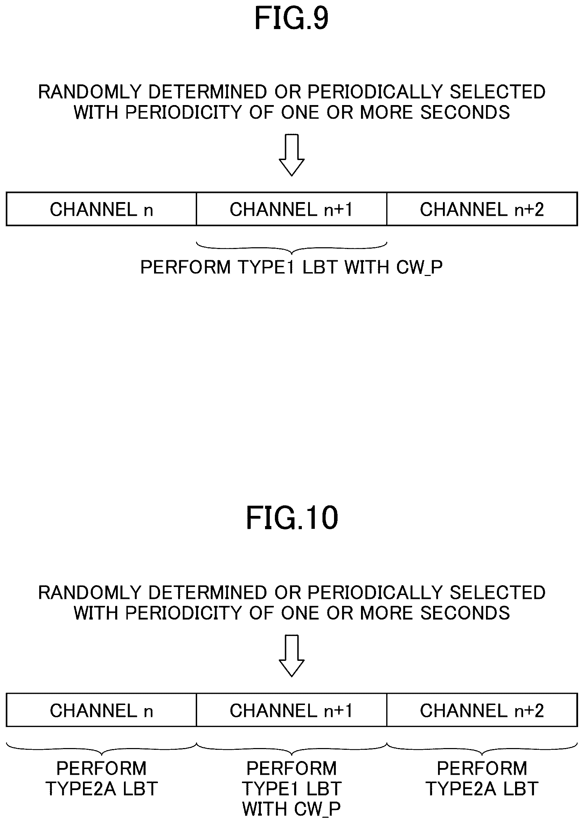

Fig. 9 is a diagram illustrating an example (3) of specifications related to the frequency domain of LBT. Fig. 9 illustrates a first step of Type B multi-channel access. The primary channel is randomly determined or periodically selected with periodicity of one or more seconds. Fig. 9 illustrates an example in which the channel n+1 is determined as the primary channel. In the primary channel, the device executes Type 1 LBT with CW_P.

Fig. 10 is a diagram illustrating an example (4) of specifications related to the frequency domain of LBT. Fig. 10 illustrates a second step of Type B multi-channel access. Fig. 10 illustrates an example in which the channel n+1 is determined as the primary channel. In channel n+1, which is the primary channel, the device executes Type 1 LBT with CW_P, and then executes Type 2A LBT in channel n and channel n+2.

Note that, in Type B1, CW_P is determined based on decoding results of PDSCH/PUSCH of all channels. In Type B2, CW_P is determined based on a decoding result of the primary channel.

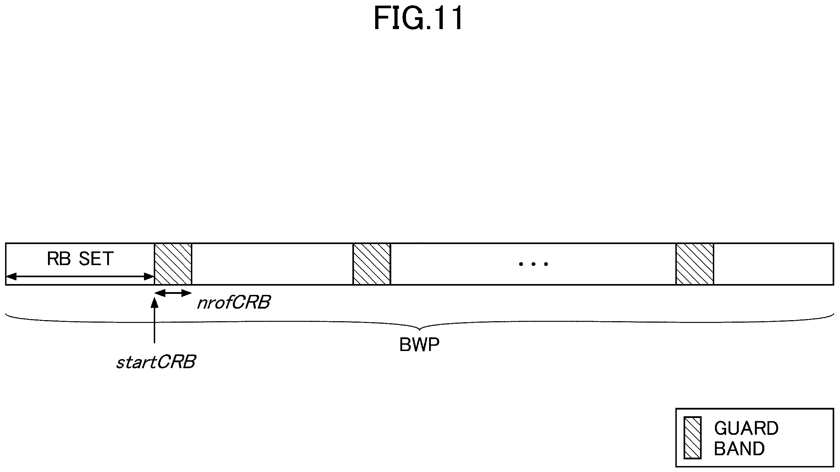

Fig. 11 is a diagram illustrating an example of a guard band. The intra-cell guard band may refer to a guard band between the LBT bandwidths when one cell defined for 3GPP Release 16 includes a plurality of LBT bandwidths. RBs included in the guard band cannot be used.

When an RRC parameter IntraCellGuardBandsPerSCS is configured (refer to Non Patent Literature 5), as illustrated in Fig. 11, the start position of the guard band within the BWP is configured by a parameter startCRB, and the width thereof is configured by a parameter nrofCRB. Furthermore, the guard band may be configured based on Non Patent Literature 6. Note that, when the RRC parameter IntraCellGuardBandsPerSCS is not configured, the guard band may be configured based on Non Patent Literature 7.

Here, a resource pool in the sidelink will be described. Table 2 shows a part of configuration of the resource pool in the sidelink.

[Table 2]

| SCS [kHz] | Minimum sub-channel size [MHz] | Maximum sub-channel size [MHz] | Maximum configurable bandwidth [MHz] |
|---|---|---|---|
| 15 | 1.8 | 18 | 486 |
| 30 | 3.6 | 36 | 972 |
| 60 | 7.2 | 72 | 1944 |

As shown in Table 2, the minimum sub-channel size, the maximum sub-channel size, and the maximum configurable bandwidth are defined for each SCS. When the size of the frequency domain of a sub-channel is indicated by the number of PRBs, {10, 12, 15, 20, 25, 50, 75, 100} may be available to be configured. The number of sub-channels in the resource pool may be configurable to be 1 to 27.

As a limitation of sub-channels in the resource pool, the resource pool includes only consecutive RBs and includes only consecutive sub-channels.

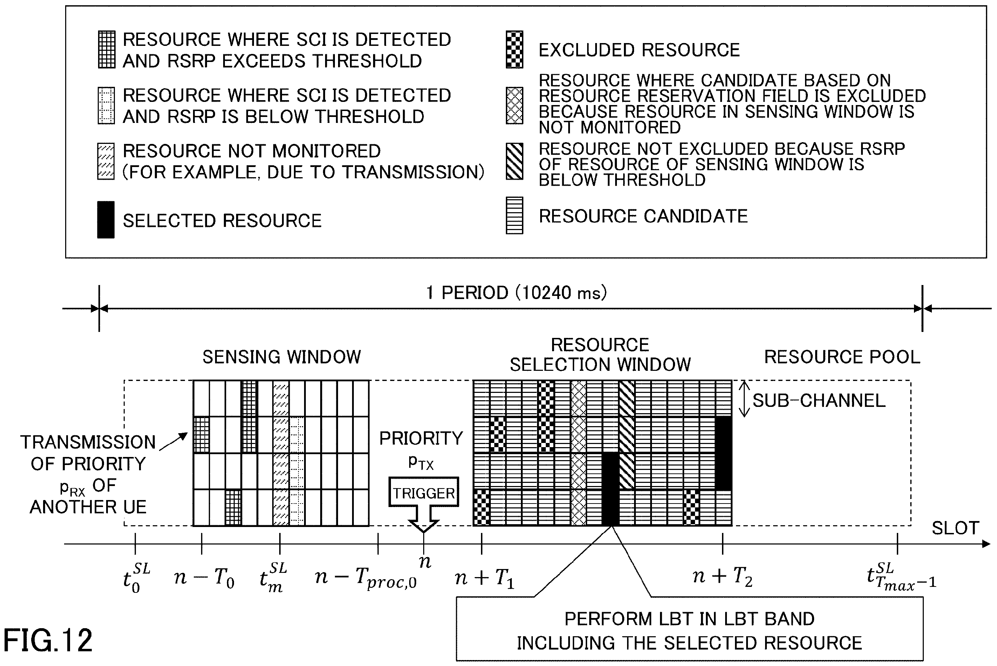

Fig. 12 is a diagram illustrating an example of LBT according to the embodiment of the present invention. In a resource allocation mode 2, the terminal 20 selects a resource and performs transmission. As illustrated in Fig. 12, the terminal 20 executes sensing with a sensing window in the resource pool. By performing sensing, the terminal 20 receives a resource reservation field or a resource assignment field included in sidelink control information (SCI) transmitted from another terminal 20, and identifies, based on the field, available resource candidates in a resource selection window in the resource pool. Subsequently, the terminal 20 randomly selects a resource from the available resource candidates.

Furthermore, as illustrated in Fig. 12, the configuration of the resource pool may have a period. For example, the period may be a period of 10,240 milliseconds. Fig. 12 illustrates an example in which slots $t_0^{SL}$ to $t_{Tmax-1}^{SL}$ are configured as a resource pool. A region of the resource pool in each period may be configured by, for example, a bitmap.

Furthermore, as illustrated in Fig. 12, it is assumed that a transmission trigger in the terminal 20 occurs in the slot n, and the priority of the transmission is $p_{TX}$. The terminal 20 can detect, for example, that another terminal 20 is performing transmission of a priority $p_{RX}$ in the sensing window from the slot $n-T_0$ to the slot immediately before the slot $n-T_{proc,0}$. When an SCI is detected in the sensing window and reference signal received power (RSRP) exceeds a threshold value, a resource in a resource selection window corresponding to the SCI is excluded. Further, when an SCI is detected in the sensing window and the RSRP is less than the threshold value, the resource in the resource selection window corresponding to the SCI is not excluded. The threshold value may be, for example, a threshold value $Th_{pTX,pRX}$ configured or defined for each resource in the sensing window based on the priority $p_{TX}$ and the priority $p_{RX}$.

Furthermore, a resource in a resource selection window, which is a candidate for resource reservation information, corresponding to a resource in a sensing window such as a slot $t_m^{SL}$ illustrated in Fig. 12 which was not monitored due to the transmission, is excluded.

In a resource selection window from a slot $n+T_1$ to a slot $n+T_2$, as illustrated in Fig. 12, resources obtained by excluding a resource identified to be occupied by another UE become available resource candidates. Assuming that a set of available resource candidates is defined as $S_A$, when $S_A$ is less than 20% of the resource selection window, the threshold value $Th_{PTX,pRx}$ configured for each resource of the sensing window may be increased by 3 dB, and resource identification may be executed again. That is, by increasing the threshold value $Th_{PTX,pRx}$ and executing the resource identification again, resources which are not excluded because the RSRP is less than the threshold value may be increased, and the set $S_A$ of resource candidates may become 20% or more of the resource selection window. When $S_A$ is less than 20% of the resource selection window, the operation of increasing the threshold value $Th_{PTX,pRx}$ configured for each resource of the sensing window by 3 dB and of executing the resource identification again may be repeatedly performed.

A lower layer of the terminal 20 may report $S_A$ to an upper layer thereof. The upper layer of the terminal 20 may execute random selection on $S_A$ to determine a resource to be used. The terminal 20 may execute sidelink transmission by using the determined resource. For example, the upper layer may be a MAC layer, and the lower layer may be a PHY layer or a physical layer.

Although the operation of the transmission side terminal 20 is described in Fig. 12, the reception side terminal 20 may detect data transmission from another terminal 20 based on a result of sensing or partial sensing and may receive data from the another terminal 20.

Further, as a procedure from resource allocation to actual transmission in the sidelink, the following two steps may be executed.

First step) As illustrated in Fig. 12, the terminal 20 executes a sensing and resource selection procedure in a 3GPP Release 16/17 sidelink.

Second step) The terminal 20 executes the above-described channel access procedure (3GPP Release 16 NR-U/ETSI broadband radio access networks (BRAN)) on a band corresponding to the resource selected in the first step).

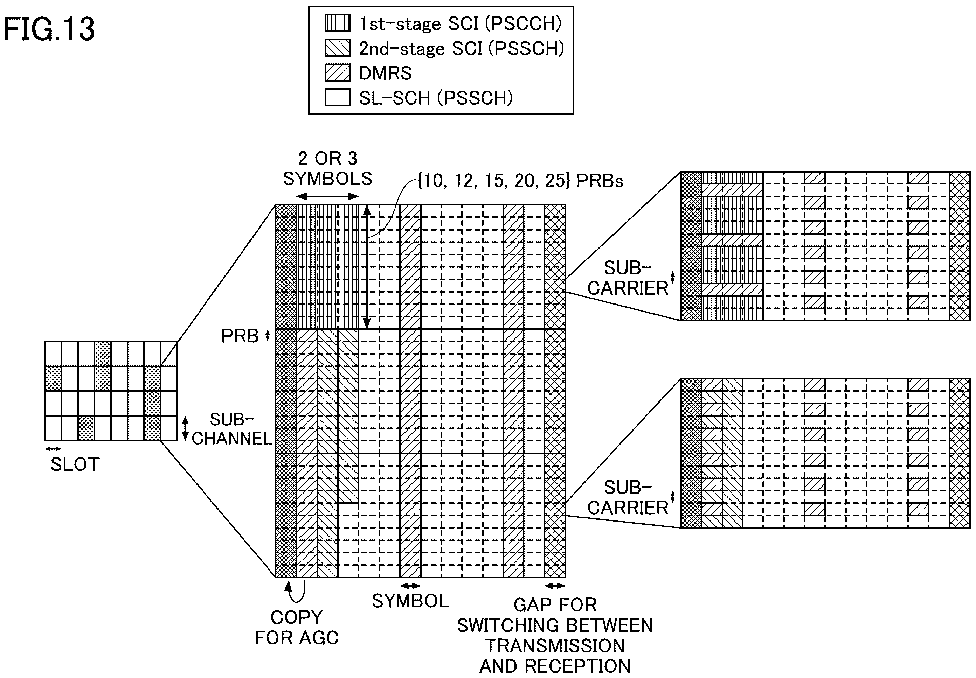

Fig. 13 is a diagram illustrating an example of a sidelink according to the embodiment of the present invention. As illustrated in Fig. 13, a control signal and a data signal of the sidelink may be configured. Fig. 13 illustrates an example in which three sub-channels are used for transmission of PSCCH and PSSCH. As illustrated in Fig. 13, SCI is separated into a first stage SCI and a second stage SCI. The first stage SCI is transmitted via PSCCH, and the second stage SCI is transmitted via PSSCH. As illustrated in Fig. 13, PSCCH carrying the first stage SCI does not exceed one sub-channel width and includes {10, 12, 15, 20, 25} PRBs and 2 or 3 symbols.

Note that the second symbol is copied to the first symbol for AGC. The last symbol is used as a gap for switching between transmission and reception.

Here, a relationship between the sub-channel and the LBT bandwidth is assumed to be 1) to 3) shown below.

1) Sub-channel = LBT bandwidth

In a case of being based on the existing SL frequency domain resource allocation, OCB requirement is not required to be considered. When a plurality of sub-channels are used, a channel access procedure for multi-channel is required to be used. Although the relationship therebetween is simple, flexible configuration of the sub-channel size is difficult.

2) Sub-channel < LBT bandwidth

OCB requirement is required to be considered. Sensing of a plurality of sub-channels can be achieved by using LBT for one channel. Although the sub-channel size can be flexibly configured, transmission including only one sub-channel is difficult to be performed, and an interlaced resource pool may be defined.

3) Sub-channel > LBT bandwidth

Because one sub-channel includes a plurality of LBT bandwidths, LBT for multi-channel is required to be used even when only one sub-channel is to be used. In a case of being based on the existing SL frequency domain resource allocation, OCB requirement is not required to be considered. The sub-channel is required to be an integer multiple of the LBT bandwidth. Although the sub-channel size can be flexibly configured, the channel access success rate is reduced because the multi-channel LBT is always used.

Therefore, the bandwidth of the sub-channel and the resource pool satisfying the above assumptions may be guaranteed or configured. Note that a bandwidth being equal to the LBT bandwidth may mean that the bandwidth is 20 MHz or an integer multiple of 20 MHz, or may mean that the bandwidth is 80% of 20 MHz or 80% of an integer multiple of 20 MHz, that is, the bandwidth is a bandwidth that satisfies the OCB requirement.

In sidelink communication on the unlicensed band, the terminal 20 may assume that only a certain specific value from a group of configurable values is applied to a parameter related to a resource pool configuration.

For example, the parameter related to the resource pool configuration may be any one or both of 1) and 2) described below.

1) Number of PRBs included in a sub-channel
2) Number of sub-channels included in a resource pool

For example, the certain specific value may be any one or both of 1) and 2) shown below.

1) The certain specific value may be 80% or more of a multiple of 20 MHz or the bandwidth of LBT, that is, a bandwidth that satisfies the OCB requirement, or may be 80% or more of a multiple of 20 MHz or the bandwidth of LBT, that is, the number of PRBs that satisfies the OCB requirement. For example, the number of PRBs included in one sub-channel may be a value included in the number of PRBs in Table 3.

[Table 3]

| SCS [kHz] | Number of PRBs | Bandwidth [MHz] |
|---|---|---|
| 15 | 100 | 18 |
| 30 | 50/100 | 18/36 |

(continued)

| SCS [kHz] | Number of PRBs | Bandwidth [MHz] |
|---|---|---|
| 60 | 25/50/75/100 | 18/36/54/72 |

As shown in Table 3, the number of PRBs included in one sub-channel may be 100 when SCS is 15 kHz, 50 or 100 when SCS is 30 kHz, or 25, 50, 75, or 100 when SCS is 60 kHz.

2) A value in a range falling within a 20 MHz band group for a 5 GHz wireless LAN defined by the BRAN regulation. For example, the maximum value of the number of sub-channels included in one resource pool may be 12 sub-channels or 6 sub-channels. When there are 12 sub-channels per one resource pool, 1 LBT bandwidth may be assumed, and when there are 6 sub-channels per one resource pool, 2 LBT bandwidths may be assumed.

In addition, different values may be applied to the certain specific value based on a specific condition. For example, the specific condition may be related to the sub-carrier spacing.

For example, the group of configurable values may be a part or all of 1) to 3) shown below.

1) Values supported in 3GPP Release 16 or 17, for example, {10, 12, 15, 20, 15, 50, 75, 100} configured by a parameter sl-SubchannelSize

2) Values supported in 3GPP Release 16 or 17, for example, {1 ... 27} configured by a parameter sl-NumSubchannel

3) Values newly supported in 3GPP Release 18 in addition to the above 1) and/or the above 2)

Further, in the sidelink communication on the unlicensed band, a new value may be added to the parameter related to the resource pool configuration.

For example, the parameter related to the resource pool configuration may be any one or both of 1) and 2) described below.

1) Number of PRBs included in a sub-channel

2) Number of sub-channels included in a resource pool

For example, the new value may be a value shown below. For example, candidates for the number of PRBs may be added to the number of PRBs included in a sub-channel (sl-SubchannelSize) such that one sub-channel satisfies $20 \times N \times 0.8$ MHz or more and $20 \times N \times 1$ MHz or less.

For example, sl-SubchannelSize = {10, 12, 15, 20, 25, 50, 75, 100, 125, 150, 175, 200, 225, 250, 275, 300, 350, 400, 450, 500, 550, 600, 700, 800, 900, 1000, 1100, 1200} may be configured.

Note that one sub-channel may be a bandwidth of an LBT band or an integer multiple of the LBT band. Note that one sub-channel may be a bandwidth that satisfies the OCB requirement for the bandwidth of the LBT band or the integer multiple of the LBT band.

In addition, the configuration or pre-configuration method related to the resource pool configuration may be changed from a method for the sidelink communication on the licensed band to a method for the sidelink communication on the unlicensed band. For example, some or all of Option 1-1) to Option 1-4) shown below may be applied. Note that the following "consecutive" or "non-consecutive" may refer to the resource arrangement in the frequency domain.

Option 1-1) One sub-channel may include consecutive or non-consecutive RBs or PRBs.

Option 1-2) One resource pool may include consecutive or non-consecutive RBs or PRBs.

Option 1-3) One resource pool may include consecutive or non-consecutive sub-channels.

Option 1-4) One sub-channel may include consecutive RBs or PRBs, and sub-channels included in the resource pool may be consecutive or may not be consecutive.

In addition, the configuration or pre-configuration method related to the resource pool configuration may be changed from a method for the sidelink communication on the licensed band to a method for the sidelink communication on the unlicensed band. For example, some or all of the methods of Option 2-1) to Option 2-5) shown below may be applied. Hereinafter, RB may be replaced with PRB.

Option 2-1) A bitmap indicating, for each RB, availability for transmission of a plurality of RBs that can be included in a sub-channel may be configured. The bitmap may be configured as many times as the number of sub-channels or the maximum number of sub-channels included in the resource pool.

Option 2-2) A bitmap indicating, for each RB, availability for transmission of a plurality of RBs included in the resource pool may be configured.

Option 2-3) A bitmap indicating, for each sub-channel, availability for transmission of a plurality of sub-channels included in the resource pool may be configured.

Option 2-4) When an intra-cell guard band is configured, RBs of the number corresponding to the intra-cell guard band may be configured at both ends of each sub-channel. The number of RBs corresponding to the intra-cell guard band may be defined for use, or may be configured based on a configuration or a pre-configuration. The configuration or pre-configuration of presence or absence of the intra-cell guard band may be executed separately from configuration or pre-configuration of the number of RBs corresponding to the intra-cell guard band.

Option 2-5) When the intra-cell guard band is configured, the position of at least a part of frequency resources included in the resource pool determined based on the configuration or the pre-configuration according to the above Option 1-1) to Option 1-4) may be assumed to be shifted by the frequency resources corresponding to the intra-cell guard band.

For example, in a certain resource pool, when the number of sub-channels N is configured by sl-NumSubchannel, lowestPRB index n is configured by sl-StartRB-Subchannel, and the number of PRBs M for each sub-channel is configured by sl-SubchannelSize, the frequency resources of the resource pool are PRBs of $[n, n + (N \times M - 1)]$. Note that the description $[a, b]$ corresponds to PRBs from index a to index b.

Here, when the intra-cell guard band is further configured and the frequency resources of the intra-cell guard band are PRBs of $[n + x1, n + x2]$, the frequency resources of the resource pool may be PRBs of $[n, n + x1 - 1]$ and $[n + x2 + 1, n + (N \times M - 1)]$. That is, a resource pool including consecutive frequency resources may be divided into two frequency resource groups by configuration of the intra-cell guard band. However, even if the frequency is non-consecutive, the resource pool may be treated as one resource pool.

For example, the above Option 2-1) and the above Option 2-3) may be combined. That is, in a sub-channel which is indicated as being available for transmission by the bitmap in the above Option 2-3), an RB which is indicated as being available for transmission by the bitmap in the Option 2-1) can be actually used for transmission.

According to the above-described embodiment, the terminal 20 can execute configuration suitable for the resource pool in the sidelink communication on the unlicensed band.

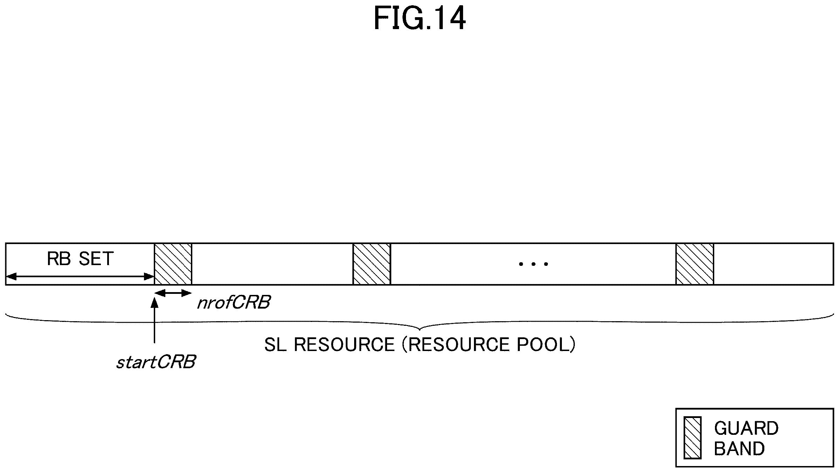

Fig. 14 is a diagram illustrating an example of a guard band according to the embodiment of the present invention. As illustrated in Fig. 14, the definition and the configuration method of the guard band between the LBT bandwidths in the sidelink resource or the resource pool have been unknown. For example, specific values such as a start position of the guard band by the parameter startCRB and a width of the guard band by the parameter nrofCRB have been not specified.

Therefore, the definition and the configuration method of the guard band between the LBT bandwidths in the sidelink resource or the resource pool may be specified.

The resource in the frequency direction configured as the resource pool may be configured by considering the intra-cell guard band.

For example, the intra-cell guard band may be determined based on the definition and/or the configuration of any one of 1) and 2) described below.

    1) Intra-cell guard band fixedly defined in the technical specifications
    2) Intra-cell guard band configured by RRC signaling

For example, the intra-cell guard band may be configured by any one of the following methods 1) and 2).
    1) Existing resource pool configuration and existing intra-cell guard band definition and/or configuration may be reused. The terminal 20 may regard, as an actually available resource pool, resources obtained by excluding frequency direction resources corresponding to the intra-cell guard band from the frequency direction resources configured by the resource pool configuration.
    2) In the resource pool configuration, configuration related to the intra-cell guard band may be added. The terminal 20 may determine the actually available resource pool with reference to the resource pool configuration. The added parameter may be some or all of the following three parameters. Parameter startCRB: a common resource block (CRB) having the smallest index among the CRBs included in each guard band configured in the resource pool. Parameter nrofCRB: the number of CRBs included in each guard band configured in the resource pool. endCRB: a CRB having the largest index among the CRBs included in each guard band configured in the resource pool.

Note that the parameter startCRB may be a parameter indicating the start position of the intra-cell guard band. The parameter nrofCRB may be a parameter indicating the length of the intra-cell guard band. The parameter endCRB may be a parameter indicating the end position of the intra-cell guard band.

Note that the intra-cell guard band may mean a band which is included in the resource pool but is not used for actual SL transmission and/or reception, or may be replaced with any one of the following expressions. 1) Intra-resource pool guard band 2) In-resource pool guard band.

Furthermore, a guard band set or preset in a certain resource pool may have the following relationship with a sub-channel set in the resource pool.

For example, the terminal 20 is not required to assume that a sub-channel partially or entirely overlapping the guard band among the sub-channels in the resource pool is used for transmission and/or reception in the sidelink communication.

For example, the terminal 20 is not required to assume that the sub-channel entirely overlapping the guard band among the sub-channels in the resource pool is used for transmission and/or reception in the sidelink communication. The terminal 20 may assume that the sub-channel partially overlapping the guard band among the sub-channels in the resource pool is used for transmission and/or reception in the sidelink communication. With respect to the above-described sub-channel, only a band not overlapping the guard band may be assumed to be used for transmission and/or reception in the sidelink communication.

According to the above-described embodiment, the terminal 20 can execute configuration related to the guard band suitable for the resource pool in the sidelink communication on the unlicensed band.

In addition, how to apply a channel access procedure to the sidelink communication for a plurality of LBT hand widths has been unclear. For example, whether or not all of the existing Types A1, A2, B1, and B2 can be used is required to be specified. In addition, how to select a primary channel is required to be specified when Type B1 or Type B2 is used.

Therefore, how to apply the channel access procedure for a plurality of LBT bandwidths to the sidelink communication may be specified.

In the channel access procedure for a plurality of LBT bandwidths (1 LBT bandwidth is, for example, 20 MHz) in the sidelink communication on the unlicensed band, all of the existing Type A1, Type A2, Type B1, and Type B2 may be usable, or a part thereof may be usable. For example, only Type A1 may be usable in the channel access procedure. For example, only Type B1 may be usable in the channel access procedure. For example, only Type A1 and Type B1 may be usable in the channel access procedure.

With respect to the method of configuring the multi-channel LBT, any one of 1) to 4) described below may be applied as a method of selecting the primary channel in Type B multi-channel access. Note that the primary channel may be referred to as a primary operating channel.

1) A sub-channel may be randomly selected from the sub-channels to be used, and the LBT bandwidth corresponding to the selected sub-channel may be configured as the primary channel.
2) An LBT bandwidth may be randomly selected from the LBT bandwidths including the sub-channels to be used and may be configured as the primary channel.
3) An LBT bandwidth including the sub-channel for transmission of PSCCH may be configured as the primary channel.
4) An LBT bandwidth including the sub-channel with the minimum index or the maximum index may be configured as the primary channel.

Note that the existing multi-access procedures of Type A1, Type A2, Type B1, and Type B2 may be the procedures defined in Non Patent Literature 4.

According to the above-described embodiment, the terminal 20 can execute a channel access procedure for a plurality of LBT bandwidths in the sidelink communication on the unlicensed band.

In addition, in order to execute transmission after an operation of LBT, the channel to be used for transmission is required to be determined to be idle according to the operation of LBT. During the x symbols before a transmission, the channel to be used for the transmission is required to be unused by other devices in the same RAT. Table 4 is a table in which the minimum or maximum required sensing period for each priority and each SCS, that is, the above-described x is indicated by the number of symbols in Type 1 channel access procedure.

[Table 4]

| Class # | Minimum deferral duration in total | | | | Maximum deferral duration in total | | | |
|---|---|---|---|---|---|---|---|---|
| | Absolut e time | Number of symbol s when SCS is 15 kHz | Number of symbol s when SCS is 30 kHz | Number of symbol s when SCS is 60 kHz | Absolut e time | Number of symbol s when SCS is 15 kHz | Number of symbol s when SCS is 30 kHz | Number of symbol s when SCS is 60 kHz |
| 1 | 52 μs | <1 | <2 | <3 | 88 μs | <1 | <3 | <5 |
| 2 | 88 μs | <1 | <3 | <5 | 160 μs | <3 | <5 | <9 |

(continued)

| Class # | Minimum deferral duration in total | | | | Maximum deferral duration in total | | | |
|---|---|---|---|---|---|---|---|---|
| | Absolute time | Number of symbols when SCS is 15 kHz | Number of symbols when SCS is 30 kHz | Number of symbols when SCS is 60 kHz | Absolute time | Number of symbols when SCS is 15 kHz | Number of symbols when SCS is 30 kHz | Number of symbols when SCS is 60 kHz |
| 3 | 178 $\mu$s | <3 | <5 | <10 | 610/925 0 $\mu$s | <9/130 | <18/26 0 | 35/519 |
| 4 | 214 $\mu$s | <3 | <6 | <12 | 9286 $\mu$s | <131 | <261 | <521 |

As shown in Table 4, the minimum value of x and the maximum value of x are specified. Here, with respect to the x symbols, there has been no method of determining that the channel to be used for transmission is not used by other devices in the same RAT.

Therefore, the method of determining that the channel to be used for transmission is not used by other devices in the same RAT may be specified.

The channel access procedures used in the sidelink communication may be limited. For example, types of the channel access procedures may be limited. For example, the channel access priority to be configured may be limited with respect to Type 1 channel access.

In addition, the time for executing the channel access procedure may be defined, or the time for executing LBT may be defined.

Furthermore, in the sidelink communication, in a part or all of a sensing procedure, a resource identification procedure, and a resource selection procedure, the terminal 20 may execute resource identification and/or resource selection by determining, in addition to the resource reserved by another UE, a resource included in a certain period before the resource reserved by another UE to be a reserved resource.

Furthermore, in the sidelink communication on the unlicensed band, the terminal 20 may determine whether or not a transmission can be performed in a certain sub-channel-slot resource based on the difference between the reception power assumed in a slot and/or a sub-channel including at least a resource to be sensed and the actual reception power.

In addition, the channel access procedure used in the sidelink communication may be limited. For example, in the sidelink communication on the unlicensed band, a specific type of the channel access procedure may be used. The specific channel access type may be Type 1 channel access, may be Type 2 channel access, may be any one or more of Types 2A, 2B, and 2C, or may be Type 3 channel access.

For example, when Type 1 channel access is used in the sidelink communication on the unlicensed band, a specific channel access priority class may be usable. For example, the specific channel access priority class may be any one or more of 1) to 4) described below.

    1) Channel access priority class 1
    2) Channel access priority class 2
    3) Channel access priority class 3
    4) Channel access priority class 4

For example, a value of X or less may be used as the channel access priority class. X may be any one of 1, 2, 3, and 4.

In addition, the time for operating the channel access procedure or the LBT or the time in which transmission is not performed may be defined.

For example, when transmission is performed in a certain slot, transmission is not required to be performed in the leading X symbols in the slot. Further, for example, transmission may be started from the (X + 1) symbol without performing transmission in the leading X symbols in the slot. The transmission of the (X + 1) symbol may be the same (repeat, repetition) as transmission of the (X + 2) symbol.

Note that X may be a variable value depending on any one of the following. For example, X may be determined based on SCS. For example, X = 1 may be configured in the case of SCS being 15 kHz, X = 2 may be configured in the case of SCS being 30 kHz, and X = 4 may be configured in the case of SCS being 60 kHz. Furthermore, for example, by taking into account the guard period of one symbol at the end of the slot defined in 3GPP Release 16, a value obtained by subtracting 1 from the above-mentioned value may be newly defined for the sidelink communication on the unlicensed band. Further, for example, X may be determined based on the channel access priority class, or may be determined based on the configurable channel access priority classes. Furthermore, for example, X may be determined based on the type of the channel access procedure to be operated for transmission in the slot.

For example, when the sidelink communication on the unlicensed band is executed, the number of symbols (for example, a parameter sl-LengthSymbols) used for SL in one slot may be assumed to be equal to or less than a predetermined value, or the predetermined value may be determined based on the channel access procedure that can be executed or the characteristics of LBT (for example, a minimum sensing period or a maximum sensing period).

For example, when the sidelink communication on the unlicensed band is executed, the start position of symbols (for example, a parameter sl-StartSymbol) used for SL in one slot may be assumed to be equal to or more than a predetermined value, or the predetermined value may be determined based on the channel access procedure that can be executed or the characteristics of LBT (for example, the minimum sensing period or the maximum sensing period).

Furthermore, in the sidelink communication, in a part or all of the sensing procedure, the resource identification procedure, and the resource selection procedure, the terminal 20 may execute resource identification and/or resource selection by determining, in addition to the resource reserved by another UE, a resource included in a certain period before the resource reserved by another UE to be a reserved resource. For example, the terminal 20 may exclude the resource included in the certain period before the resource from the resource selection candidates.

The "reserved resource" may be a resource which is not included in the subset of resources defined in Non Patent Literature 6 or a resource which is excluded in any of the procedures defined in Non Patent Literature 6.

The "certain period" may be replaced with any one of 1) and 2) described below. Note that the channel access procedure or LBT may be limited to a specific type, or all of the types may be used.

1) The minimum value of the time required for the channel access procedure or LBT or the number of slots corresponding to the minimum value of the time. The number of slots may be different depending on SCS.

2) The maximum value of the time required for the channel access procedure or LBT or the number of slots corresponding to the maximum value of the time. The number of slots may be different depending on SCS.

The "resource included in the certain period" may be a resource to be excluded in the resource identification procedure (refer to Non Patent Literature 6). For example, in the resource identification procedure, X slots immediately before a single-slot resource may be excluded. X may be a time or the number of slots corresponding to the "certain period". Furthermore, for example, in the procedure of the sidelink grant reception and the SCI transmission (refer to Non Patent Literature 8), the "resource included in the certain period" may be taken into account.

Furthermore, in the sidelink communication on the unlicensed band, the terminal 20 may determine whether or not a transmission can be performed in a certain sub-channel-slot resource based on the difference between the reception power assumed in a slot and/or a sub-channel including at least a resource to be sensed and the actual reception power.

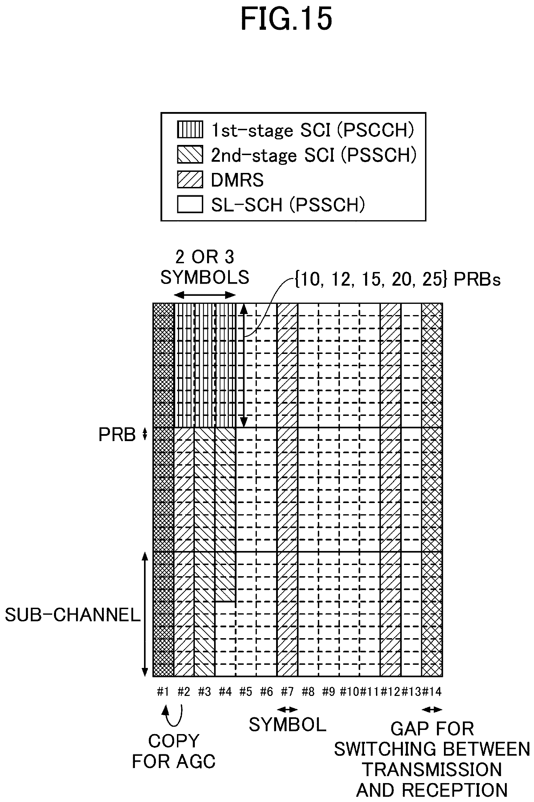

Fig. 15 is a diagram illustrating an example of LBT in the sidelink according to the embodiment of the present invention. For example, in Fig. 15, when LBT is performed by using a symbol #12 and a symbol #13, the terminal 20 may determine a result of the LBT based on the difference between an RSRP value calculated from reception of PSCCH/PSSCH transmitted in another symbol (any one of a symbol #1 to a symbol #11) and an RSRP value measured or calculated in the symbol #12 and the symbol #13.

When RSRP measured in the symbol #12 and the symbol #13 is larger than that in another symbol by X dB or more, the terminal 20 may determine that LBT has failed. That is, the terminal 20 may determine that interference is detected.

On the other hand, when RSRP measured in the symbol #12 and the symbol #13 is lower than RSRP in another symbol + X dB or is equal to or lower than RSRP in another symbol + X dB, the terminal 20 may determine that LBT is successful. That is, the terminal 20 may determine that interference is not detected.

Note that the above operation may be applied to a symbol #14. When the above operation is applied to the symbol #14, the terminal 20 may determine the result of the LBT based on the difference between a value obtained by applying predetermined correction to the RSRP value calculated from reception of PSCCH/PSSCH transmitted in another symbol and the RSRP value measured or calculated in the symbol #14. The predetermined correction may be correction corresponding to a transition period after transmission of the symbol #13 in the transmitting UE.

According to the above-described embodiment, the terminal 20 can determine that the channel used for transmission is not used by another device located in the same RAT in the sidelink communication on the unlicensed band.

In the above-described embodiment, the "configuration" may be replaced with a "pre-configuration".

The above-described embodiment may be applied to an operation in which a certain terminal 20 configures or allocates a transmission resource of another terminal 20.

The above-described embodiment is not limited to be applied to the V2X terminal, and may be applied to a terminal that performs D2D communication.

According to the above-described embodiment, it is possible to execute device-to-device direct communication satisfying specifications in the unlicensed band.

(Device Configuration)

Next, functional configuration examples of the base station 10 and the terminal 20 that execute the processing and operation described above will be described. The base station 10 and the terminal 20 include a function of implementing the above-described embodiment. However, each of the base station 10 and the terminal 20 may have only a part of functions in the embodiment.

<Base Station 10>

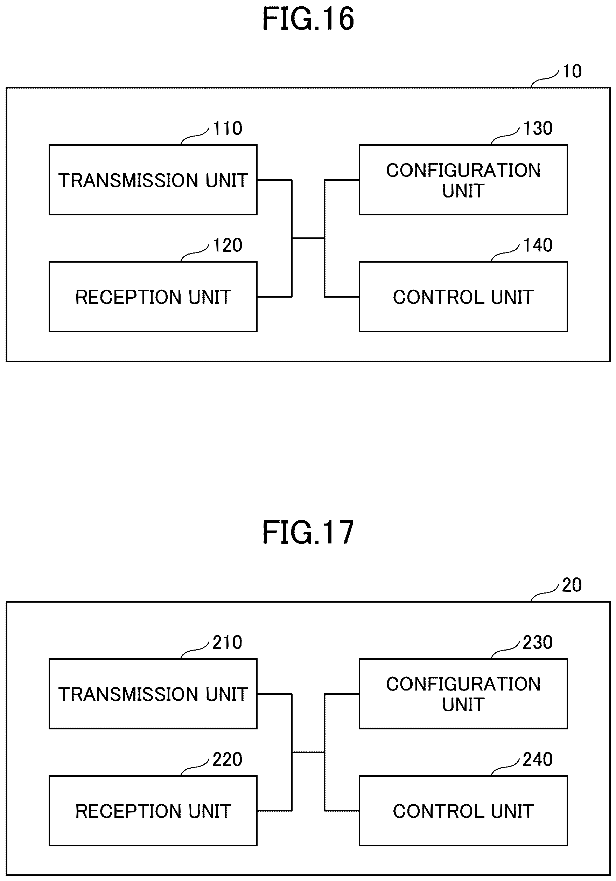

Fig. 16 is a diagram illustrating an example of a functional configuration of the base station 10. As illustrated in Fig. 16, the base station 10 includes a transmission unit 110, a reception unit 120, a configuration unit 130, and a control unit 140. The functional configuration illustrated in Fig. 16 is merely an example. As long as the operation according to the embodiment of the present invention can be executed, the functional classification and the name of the functional units may be freely selected.

The transmission unit 110 has a function of generating a signal to be transmitted to the terminal 20 side and wirelessly transmitting the signal. The reception unit 120 has a function of receiving various signals transmitted from the terminal 20 and acquiring, for example, information of an upper layer from the received signals. In addition, the transmission unit 110 has a function of transmitting NR-PSS, NR-SSS, NR-PBCH, a DL/UL control signal, a DL reference signal, and the like to the terminal 20.

The configuration unit 130 stores setting information set in advance and various types of setting information to be transmitted to the terminal 20 in a storage device, and reads the setting information from the storage device as necessary. A content of the setting information is, for example, information related to setting of the D2D communication.

As described in the embodiment, the control unit 140 performs processing related to setting for the terminal 20 to perform the D2D communication. Furthermore, the control unit 140 transmits scheduling of the D2D communication and the DL communication to the terminal 20 via the transmission unit 110. Furthermore, the control unit 140 receives information regarding HARQ responses of the D2D communication and the DL communication from the terminal 20 via the reception unit 120. The functional unit related to signal transmission in the control unit 140 may be included in the transmission unit 110, and the functional unit related to signal reception in the control unit 140 may be included in the reception unit 120.

<Terminal 20>

Fig. 17 is a diagram illustrating an example of a functional configuration of the terminal 20. As illustrated in Fig. 17, the terminal 20 includes a transmission unit 210, a reception unit 220, a configuration unit 230, and a control unit 240. The functional configuration illustrated in Fig. 17 is merely an example. As long as the operation according to the embodiment of the present invention can be executed, the functional classification and the name of the functional units may be freely selected.

The transmission unit 210 generates a transmission signal from transmission data and wirelessly transmits the transmission signal. The reception unit 220 wirelessly receives various signals and acquires a signal of an upper layer from the received signals of a physical layer. Furthermore, the reception unit 220 has a function of receiving NR-PSS, NR-SSS, NR-PBCH, a DL/UL/SL control signal, a reference signal, and the like transmitted from the base station 10. Furthermore, for example, the transmission unit 210 transmits a physical sidelink control channel (PSCCH), a physical sidelink shared channel (PSSCH), a physical sidelink discovery channel (PSDCH), a physical sidelink broadcast channel (PSBCH), or the like to the other terminal 20 as the D2D communication, and the reception unit 220 receives PSCCH, PSSCH, PSDCH, PSBCH, or the like from the other terminal 20.

The configuration unit 230 stores various types of setting information received from the base station 10 or the terminal 20 by the reception unit 220 in a storage device, and reads the setting information from the storage device as necessary. The configuration unit 230 also stores setting information set in advance. A content of the setting information is, for example, information related to setting of the D2D communication.

As described in the embodiment, the control unit 240 controls the D2D communication for establishing an RRC connection with another terminal 20. Furthermore, the control unit 240 performs processing related to a power saving operation. Furthermore, the control unit 240 performs processing related to HARQ of the D2D communication and the DL communication. Furthermore, the control unit 240 transmits, to the base station 10, information regarding HARQ responses of the D2D communication and the DL communication scheduled from the base station 10 to another terminal 20. Furthermore, the control unit 240 may schedule the D2D communication to another terminal 20. Furthermore, the control unit 240 may autonomously select a resource to be used for the D2D communication from a resource selection window based on a result of sensing, or may execute reevaluation or pre-emption. Furthermore, the control unit 240 performs processing related to power saving in transmission and reception of the D2D communication. Furthermore, the control unit 240 performs processing related to inter-terminal cooperation in the D2D communication. The functional unit related to signal transmission in the control unit 240 may be included in the transmission unit 210, and the functional unit related to signal reception in the control unit 240 may be included in the reception unit 220.

(Hardware Configuration)

The block diagrams (Figs. 16 and 17) used for the description of the above embodiment illustrate blocks of functional units. The functional blocks (configuration units) are realized by any combination of at least one of hardware and software. A method of implementing each functional block is not particularly limited. That is, each functional block may be implemented by using one physically or logically combined device, or may be implemented by directly or indirectly (for example, by using wired, wireless, or the like) connecting two or more physically or logically separated devices to each other and using the plurality of devices. The functional block may be implemented by combining software with the one device or the plurality of devices.

The functions include, but are not limited to, deciding, determining, judging, calculating, computing, processing, deriving, investigating, searching, confirming, receiving, transmitting, outputting, accessing, resolving, selecting, choosing, establishing, comparing, assuming, expecting, considering, broadcasting, notifying, communicating, forwarding, configuring, reconfiguring, allocating and mapping, assigning, and the like. For example, a functional block (configuration unit) that causes transmission to function is referred to as a transmission unit (transmitting unit) or a transmitter. In any case, as described above, the implementation method is not particularly limited.

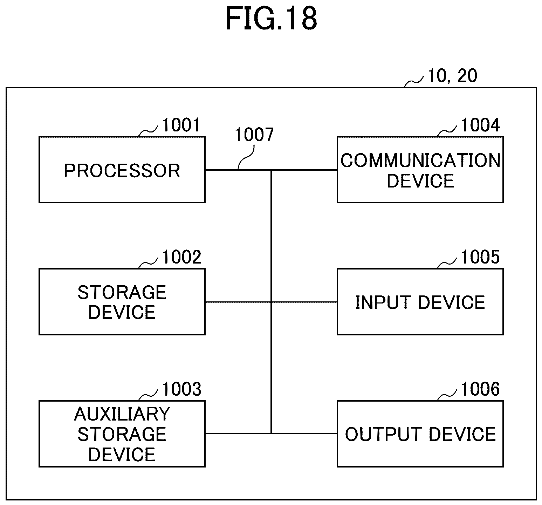

For example, the base station 10, the terminal 20, and the like in the embodiment of the present disclosure may function as a computer that performs processing of a wireless communication method of the present disclosure. Fig. 18 is a diagram illustrating an example of hardware configurations of the base station 10 and the terminal 20 according to the embodiment of the present disclosure. The base station 10 and the terminal 20 described above may be physically configured as a computer device including a processor 1001, a storage device 1002, an auxiliary storage device 1003, a communication device 1004, an input device 1005, an output device 1006, a bus 1007, and the like.

In the following description, the term "device" can be replaced with a circuit, a device, a unit, or the like. The hardware configurations of the base station 10 and the terminal 20 may be configured to include one or more devices illustrated in the drawing, or may be configured without including a part of devices.

Each function in the base station 10 and the terminal 20 is implemented by the processor 1001 performing calculation by loading predetermined software (program) on hardware such as the processor 1001 and the storage device 1002, controlling communication by the communication device 1004, and controlling at least one of reading and writing of data in the storage device 1002 and the auxiliary storage device 1003.

The processor 1001 operates, for example, an operating system to control the entire computer. The processor 1001 may include a central processing unit (CPU) including an interface with a peripheral device, a control device, an arithmetic device, a register, and the like. For example, the control unit 140, the control unit 240, and the like described above may be implemented by the processor 1001.

In addition, the processor 1001 reads a program (a program code), a software module, data, or the like from at least one of the auxiliary storage device 1003 and the communication device 1004 to the storage device 1002, and executes various types of processing according to the program, the software module, the data, or the like. As the program, a program that causes a computer to execute at least part of the operations described in the above-described embodiments is used. For example, the control unit 140 of the base station 10 illustrated in Fig. 16 may be implemented by a control program stored in the storage device 1002 and operated by the processor 1001. Furthermore, for example, the control unit 240 of the terminal 20 illustrated in Fig. 17 may be implemented by a control program stored in the storage device 1002 and operated by the processor 1001. Although it has been described that the above-described various types of processing are executed by one processor 1001, the various types of processing may be executed simultaneously or sequentially by two or more processors 1001. The processor 1001 may be implemented by one or more chips. The program may be transmitted from a network via an electric communication line.

The storage device 1002 is a computer-readable recording medium, and may be configured with, for example, at least one of a read only memory (ROM), an erasable programmable ROM (EPROM), an electrically erasable programmable ROM (EEPROM), a random access memory (RAM), and the like. The storage device 1002 may be referred to as a register, a cache, a main memory (a main storage device), or the like. The storage device 1002 can store a program (a program code), a software module, and the like that can be executed to implement the communication method according to the embodiment of the present disclosure.

The auxiliary storage device 1003 is a computer-readable recording medium, and may be configured with, for example, at least one of an optical disk such as a compact disc ROM (CD-ROM), a hard disk drive, a flexible disk, a magneto-optical disk (for example, a compact disc, a digital versatile disc, or a Blu-ray (registered trademark) disc), a smart card, a flash memory (for example, a card, a stick, or a key drive), a floppy (registered trademark) disk, a magnetic strip, and the like. The above-described storage medium may be, for example, a database including at least one of the storage device 1002 and the auxiliary storage device 1003, a server, or another appropriate medium.

The communication device 1004 is hardware (a transmission/reception device) for performing communication between computers via at least one of a wired network and a wireless network, and is also referred to as, for example, a network device, a network controller, a network card, a communication module, or the like. The communication device 1004 may be configured with a high-frequency switch, a duplexer, a filter, a frequency synthesizer, and the like to implement, for example, at least one of frequency division duplex (FDD) and time division duplex (TDD). For example, a transmission/reception antenna, an amplifier unit, a transmission/reception unit, a transmission/reception path interface, and the like may be implemented by the communication device 1004. The transmission/reception unit may be implemented such that the transmission unit and the reception unit are physically or logically separated from each other.

The input device 1005 is an input device (for example, a keyboard, a mouse, a microphone, a switch, a button, a sensor, or the like) that receives an input from the outside. The output device 1006 is an output device (for example, a display, a speaker, an LED lamp, and the like) that performs an output to the outside. Note that the input device 1005 and the output device 1006 may be formed to be integrated with each other (for example, a touch panel).

In addition, the respective devices such as the processor 1001 and the storage device 1002 are connected to each other by the bus 1007 for communicating information. The bus 1007 may be configured using a single bus or may be configured using different buses between the devices.

Furthermore, the base station 10 and the terminal 20 may be configured to include hardware such as a microprocessor, a digital signal processor (DSP), an application specific integrated circuit (ASIC), a programmable logic device (PLD), or a field programmable gate array (FPGA), and some or all of the functional blocks may be implemented by the hardware. For example, the processor 1001 may be implemented using at least one of the pieces of hardware.

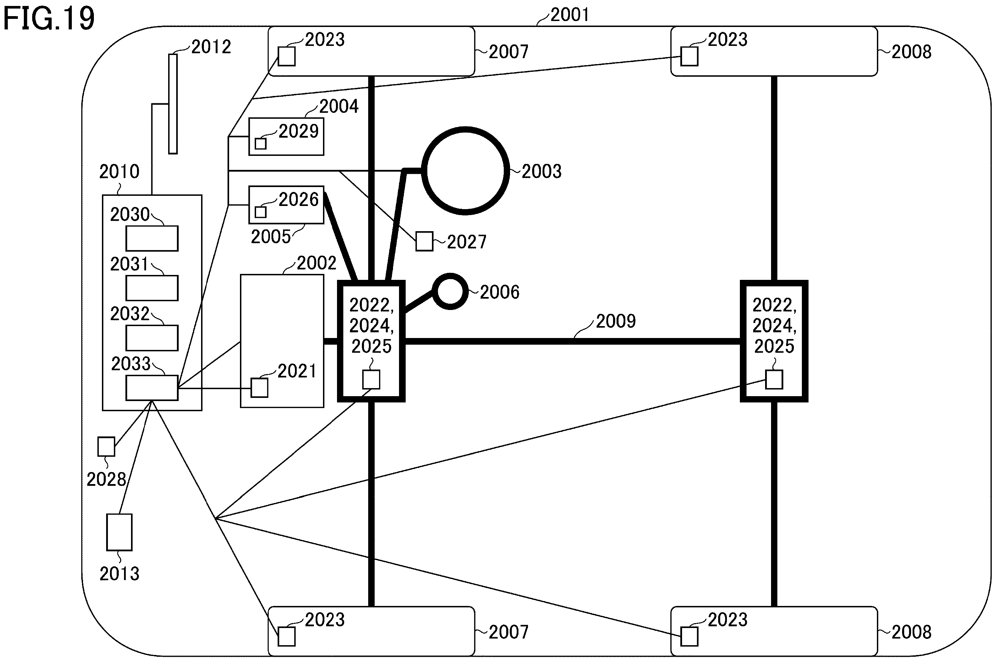

Fig. 19 illustrates a configuration example of a vehicle 2001. As illustrated in Fig. 19, the vehicle 2001 includes a drive unit 2002, a steering unit 2003, an accelerator pedal 2004, a brake pedal 2005, a shift lever 2006, a front wheel 2007, a rear wheel 2008, an axle 2009, an electronic control unit 2010, various sensors 2021 to 2029, an information service unit 2012, and a communication module 2013. Each aspect/embodiment described in the present disclosure may be applied to a communication device mounted on the vehicle 2001, and for example, may be applied to the communication module 2013.

The drive unit 2002 includes, for example, an engine, a motor, or a hybrid of an engine and a motor. The steering unit 2003 includes at least a steering wheel (also referred to as a handle), and is configured to steer at least one of the front wheel and the rear wheel based on an operation of the steering wheel operated by a user.

The electronic control unit 2010 includes a microprocessor 2031, a memory (ROM, RAM) 2032, and a communication port (IO port) 2033. Signals from various sensors 2021 to 2029 provided in the vehicle 2001 are input to the electronic control unit 2010. The electronic control unit 2010 may be referred to as an electronic control unit (ECU).

Examples of signals from the various sensors 2021 to 2029 include a current signal from the current sensor 2021 that senses the current of the motor, a rotation speed signal of the front wheel and the rear wheel acquired by the rotation speed sensor 2022, an air pressure signal of the front wheel and the rear wheel acquired by the air pressure sensor 2023, a vehicle speed signal acquired by the vehicle speed sensor 2024, an acceleration signal acquired by the acceleration sensor 2025, a depression amount signal of an accelerator pedal acquired by the accelerator pedal sensor 2029, a depression amount signal of a brake pedal acquired by the brake pedal sensor 2026, an operation signal of a shift lever acquired by the shift lever sensor 2027, and a detection signal for detecting an obstacle, a vehicle, a pedestrian, and the like acquired by the object detection sensor 2028.

The information service unit 2012 is configured with various devices for providing various types of information such as driving information, traffic information, and entertainment information, such as a car navigation system, an audio system, a speaker, a television, and a radio, and one or more ECUs that control the devices. The information service unit 2012 provides various types of multi-media information and multi-media services to an occupant of the vehicle 2001 using information acquired from an external device via the communication module 2013 or the like.

A driving assistance system unit 2030 is configured with various devices for providing functions of preventing an accident in advance and reducing a driver's driving load, such as a millimeter wave radar, light detection and ranging (LiDAR), a camera, a positioning locator (for example, GNSS or the like), map information (for example, a high definition (HD) map, an autonomous vehicle (AV) map, and the like), a gyro system (for example, an inertial measurement unit (IMU), an inertial navigation system (INS), or the like), an artificial intelligence (AI) chip, and an AI processor, and one or more ECUs that control the devices. The driving assistance system unit 2030 also transmits and receives various types of information via the communication module 2013 to implement a driving assistance function or an automatic driving function.

The communication module 2013 may communicate with the microprocessor 2031 and components of the vehicle 2001 via a communication port. For example, the communication module 2013 transmits and receives, via the communication port 2033, data to and from the drive unit 2002, the steering unit 2003, the accelerator pedal 2004, the brake pedal 2005, the shift lever 2006, the front wheel 2007, the rear wheel 2008, the axle 2009, the microprocessor 2031 and the memory (ROM, RAM) 2032 in the electronic control unit 2010, and the sensors 2021 to 2029 provided in the vehicle 2001.

The communication module 2013 is a communication device capable of being controlled by the microprocessor 2031 of the electronic control unit 2010 and capable of communicating with an external device. For example, various types of information are transmitted and received to and from the external device via wireless communication. The communication module 2013 may be provided on the inside or the outside of the electronic control unit 2010. The external device may be, for example, a base station, a mobile station, or the like.

The communication module 2013 transmits a current signal from a current sensor input to the electronic control unit 2010 to an external device via wireless communication. In addition, the communication module 2013 also transmits, to an external device via wireless communication, the rotation speed signal of the front wheel and the rear wheel acquired by the rotation speed sensor 2022, the air pressure signal of the front wheel and the rear wheel acquired by the air pressure sensor 2023, the vehicle speed signal acquired by the vehicle speed sensor 2024, the acceleration signal acquired by the acceleration sensor 2025, the depression amount signal of the accelerator pedal acquired by the accelerator pedal sensor 2029, the depression amount signal of the brake pedal acquired by the brake pedal sensor 2026, the operation signal of the shift lever acquired by the shift lever sensor 2027, the detection signal for detecting the obstacle, the vehicle, the pedestrian, and the like acquired by the object detection sensor 2028, and the like, which are input to the electronic control unit 2010.

The communication module 2013 receives various types of information (traffic information, signal information, inter-vehicle information, and the like) transmitted from an external device, and displays the information on the information service unit 2012 provided in the vehicle 2001. The communication module 2013 also stores various types of information received from the external device in the memory 2032 available by the microprocessor 2031. Based on the information stored in the memory 2032, the microprocessor 2031 may control the drive unit 2002, the steering unit 2003, the accelerator pedal 2004, the brake pedal 2005, the shift lever 2006, the front wheel 2007, the rear wheel 2008, the axle 2009, the sensors 2021 to 2029, and the like included in the vehicle 2001.

(Summary of Embodiments)

As described above, according to the embodiment of the present invention, there is provided a terminal including: a control unit configured to identify, based on a parameter specifying information related to a resource in a frequency domain, a configuration of a resource pool in an unlicensed band; a reception unit configured to receive a signal from another terminal in the resource pool; and a transmission unit configured to transmit a signal to the another terminal in the resource pool, and, in this terminal, the control unit configures an intra-cell guard band in the resource pool based on the parameter.

According to the above-described configuration, the terminal 20 can execute configuration related to a guard band that is suitable for a resource pool in sidelink communication on an unlicensed band. That is, it is possible to execute inter-terminal direct communication that satisfies specifications in an unlicensed band.

The control unit may configure the intra-cell guard band in the resource pool based on the parameter defined in the technical specifications, or configures the intra-cell guard band in the resource pool based on the parameter configured by signaling. According to the above-described configuration, the terminal 20 can execute configuration related to a guard band that is suitable for a resource pool in sidelink communication on an unlicensed band.

The control unit may determine that resources in the frequency domain obtained by excluding the intra-cell guard band from the resource pool as being actually available resources. According to the above-described configuration, the terminal 20 can execute configuration related to a guard band that is suitable for a resource pool in sidelink communication on an unlicensed band.

The control unit may identify a start position, a length, and an end position of the intra-cell guard band in the frequency domain based on the parameter. According to the above-described configuration, the terminal 20 can execute configuration related to a guard band that is suitable for a resource pool in sidelink communication on an unlicensed band.

The control unit may not assume that a sub-channel that partially or entirely overlaps the intra-cell guard band is used. According to the above-described configuration, the terminal 20 can execute configuration related to a guard band that is suitable for a resource pool in sidelink communication on an unlicensed band.

Furthermore, according to an embodiment of the present invention, there is provided a communication method of causing a terminal to execute: a control step of identifying, based on a parameter specifying information related to a resource in a frequency domain, a configuration of a resource pool in an unlicensed band; a reception step of receiving a signal from another terminal in the resource pool; and a transmission step of transmitting a signal to the another terminal in the resource pool; and a step of configuring an intra-cell guard band in the resource pool based on the parameter.

According to the above-described configuration, the terminal 20 can execute configuration related to a guard band that is suitable for a resource pool in sidelink communication on an unlicensed band. That is, it is possible to execute inter-terminal direct communication that satisfies specifications in an unlicensed band.

(Supplement to Embodiment)

Although the embodiments of the present invention have been described above, the disclosed invention is not limited to such embodiments, and those skilled in the art will understand various modifications, revisions, alternatives, substitutions, and the like. Although the description has been given using specific numerical examples to facilitate understanding of the invention, the numerical values are merely examples, and any appropriate value may be used, unless otherwise specified. The classification of items in the above description is not essential to the present invention, and items described in two or more items may be used in combination as necessary, or items described in one item may be applied to items described in another item (as long as there is no contradiction). A boundary of a functional unit or a processing unit in the functional block diagram does not necessarily correspond to a boundary of a physical component. The operations of the plurality of functional units may be physically performed by one component, or the operation of one functional unit may be physically performed by a plurality of components. In the processing procedure described in the embodiment, the order of the processing may be changed as long as there is no contradiction. For convenience of processing description, the base station 10 and the terminal 20 have been described using a functional block diagram, but such a device may be implemented by hardware, software, or a combination thereof. Software operated by a processor included in the base station 10 according to the embodiments of the present invention, and software operated by a processor included in the terminal 20 according to the embodiments of the present invention may be stored in any appropriate storage medium such as a random access memory (RAM), a flash memory, a read-only memory (ROM), an EPROM, an EEPROM, a register, a hard disk (HDD), a removable disk, a CD-ROM, a database, or a server.

Furthermore, the indication of information is not limited to the aspects/embodiments described in the present disclosure, and may be performed using other methods. For example, the indication of information may be performed by physical layer signaling (for example, downlink control information (DCI) and uplink control information (UCI)), upper layer signaling (for example, radio resource control (RRC) signaling and medium access control (MAC) signaling), broadcast information (master information block (MIB) and system information block (SIB)), other signals, or a combination thereof. Furthermore, the RRC signaling may be referred to as an RRC message, and may be referred to as, for example, an RRC connection setup message, an RRC connection reconfiguration message, or the like.

Each aspect/embodiment described in the present disclosure may be applied to at least one of a system utilizing long term evolution (LTE), LTE-Advanced (LTE-A), SUPER 3G, IMT-Advanced, 4th generation mobile communication system (4G), 5th generation mobile communication system (5G), 6th generation mobile communication system (6G), xth generation mobile communication system (xG) (xG (x is, for example, an integer or a decimal)), future radio access (FRA), new radio (NR), new radio access (NX), future generation radio access (FX), W-CDMA (registered trademark), GSM (registered trademark), CDMA2000, ultra mobile broadband (UMB), IEEE 802.11 (Wi-Fi (registered trademark)), IEEE 802.16 (WiMAX (registered trademark)), IEEE 802.20, Ultra-WideBand (UWB), Bluetooth (registered trademark), and other appropriate systems, and a next generation system which is extended, modified, generated, and specified based thereon. Further, a plurality of systems may be applied in combination (for example, a combination of at least one of LTE and LTE-A and 5G, and the like).

The order of the processing procedure, sequence, flowchart, and the like of each aspect/embodiment described in the present specification may be changed as long as there is no contradiction. For example, for the method described in the present disclosure, elements of various steps are presented using an example order, and are not limited to the presented particular order.

The specific operation described as being performed by the base station 10 in the present specification may be performed by an upper node thereof in some cases. In a network including one or more network nodes including the base station 10, it is obvious that various operations performed for communication with the terminal 20 may be performed by at least one of the base station 10 and other network nodes (for example, MME, S-GW, or the like is conceivable, but the present invention is not limited thereto) other than the base station 10. Although a description has been given as to a case in which there is one other network node other than the base station 10, the other network node may be a combination of a plurality of other network nodes (for example, MME and S-GW).

Information, a signal, or the like described in the present disclosure can be output from an upper layer (or a lower layer) to a lower layer (or an upper layer). Input and output may be performed via a plurality of network nodes.

The input/output information and the like may be stored in a specific location (for example, in a memory) or may be managed using a management table. The input/output information and the like can be overwritten, updated, or additionally written. The output information and the like may be deleted. The input information and the like may be transmitted to another device.

The determination in the present disclosure may be made by a value represented by one bit (0 or 1), may be made by a true/false value (Boolean: true or false), or may be made by comparison of numerical values (for example, comparison with a predetermined value).

Software, whether referred to as software, firmware, middleware, microcode, hardware description language, or other names, should be construed broadly to mean an instruction, an instruction set, a code, a code segment, a program code, a program, a subprogram, a software module, an application, a software application, a software package, a routine, a subroutine, an object, an executable file, an execution thread, a procedure, a function, and the like.

In addition, software, instructions, information, and the like may be transmitted and received via a transmission medium. For example, when software is transmitted from a website, a server, or other remote sources using at least one of a wired technology (a coaxial cable, an optical fiber cable, a twisted pair, a digital subscriber line (DSL), or the like) and a wireless technology (infrared rays, microwaves, or the like), at least one of the wired and wireless technologies is included within the definition of the transmission medium.

Information, signals, and the like described in the present disclosure may be represented using any one of a variety of different techniques. For example, data, an instruction, a command, information, a signal, a bit, a symbol, a chip, and the like which may be mentioned throughout the above description may be represented by a voltage, a current, an electromagnetic wave, a magnetic field or a particle, an optical field or a photon, or any combination thereof.

Note that the terms described in the present disclosure and the terms necessary for understanding the present disclosure may be replaced with terms having the same or similar meanings. For example, at least one of the channel and the symbol may be a signal (signaling). The signal may also be a message. In addition, a component carrier (CC) may be referred to as a carrier frequency, a cell, a frequency carrier, or the like.

The terms "system" and "network" used in the present disclosure are used interchangeably.

In addition, information, parameters, and the like described in the present disclosure may be represented using an absolute value, may be represented using a relative value from a predetermined value, or may be represented using another piece of corresponding information. For example, a radio resource may be indicated by an index.

The names used for parameters described above are not limitative names in any way. Furthermore, mathematical formulas and the like using the parameters may be different from those explicitly disclosed in the present disclosure. Since various channels (for example, PUCCH, PDCCH, and the like) and information elements can be identified by any suitable names, various names assigned to the various channels and information elements are not limitative names in any way.

In the present disclosure, terms such as "base station (BS)", "radio base station", "base station", "fixed station", "NodeB", "eNodeB (eNB)", "gNodeB (gNB)", "access point", "transmission point", "reception point", "transmission/reception point", "cell", "sector", "cell group", "carrier", and "component carrier" can be used interchangeably. The base station may also be referred to as a macro cell, a small cell, a femto cell, a pico cell, or the like.

The base station may accommodate one or more (for example, three) cells. When the base station accommodates a plurality of cells, an entire coverage area of the base station may be divided into a plurality of smaller areas, and each smaller area may also provide a communication service by a base station subsystem (for example, a small base station for indoor use (remote radio head (RRH))). The term "cell" or "sector" refers to a part or the whole of a coverage area of at least one of the base station and the base station subsystem that performs communication service in the coverage.

In the present disclosure, terms such as "mobile station (MS)", "user terminal", "user equipment (UE)", and "terminal" can be used interchangeably.

The mobile station may also be referred to, by those skilled in the art, as a subscriber station, a mobile unit, a subscriber unit, a wireless unit, a remote unit, a mobile device, a wireless device, a wireless communication device, a remote device, a mobile subscriber station, an access terminal, a mobile terminal, a wireless terminal, a remote terminal, a handset, a user agent, a mobile client, a client, or some other suitable term.

At least one of the base station and the mobile station may be referred to as a transmission device, a reception device, a communication device, or the like. Note that at least one of the base station and the mobile station may be a device mounted on a mobile object, the mobile object itself, or the like. The mobile object may be a vehicle (for example, a car, an airplane, or the like), a mobile object which is movable without human intervention (for example, a drone, a self-driving vehicle, or the like), or a robot (manned type or unmanned type). Note that at least one of the base station and the mobile station includes a device which does not necessarily move during communication operation. For example, at least one of the base station and the mobile station may be an Internet of Things (IoT) device such as a sensor.

In addition, the base station in the present disclosure may be replaced with the user terminal. For example, each aspect/embodiment of the present disclosure may be applied to a configuration in which communication between the base station and the user terminal is replaced with communication between a plurality of terminals 20 (for example, may be referred to as device-to-device (D2D), vehicle-to-everything (V2X), or the like). Here, the terminal 20 may have a function of the base station 10 described above. In addition, words such as "upstream" and "downstream" may be replaced with words corresponding to device-to-device communication (for example, "side"). For example, an uplink channel, a downlink channel, and the like may be replaced with a side channel.

Similarly, the user terminal in the present disclosure may be replaced with the base station. Here, the base station may have a function of the user terminal described above.

The terms "deciding" and "determining" used in the present disclosure may encompass a wide variety of actions.

The terms "deciding" and "determining" may include considering, as "deciding" and "determining", what has been obtained by, for example, judging, calculating, computing, processing, deriving, investigating, searching (looking up, search, inquiry) (for example, searching in a table, a database, or another data structure), and ascertaining. Furthermore, "deciding" and "determining" may include considering, as "deciding" and "determining", what has been obtained by receiving (for example, receiving information), transmitting (for example, transmitting information), inputting, outputting, and accessing (for example, accessing data in a memory). In addition, "deciding" and "determining" may include considering, as "deciding" and "determining", what has been obtained by resolving, selecting, choosing, establishing, comparing, and the like. That is, "deciding" and "determining" may include considering some operations as "deciding" or "determining". Further, "deciding (determining)" may be replaced with "assuming", "expecting", "considering", or the like.

The terms "connected", "coupled", or any variation thereof mean any direct or indirect connection or coupling between two or more elements, and one or more intermediate elements may exist between two elements which are "connected" or "coupled" to each other. The coupling or connection between the elements may be physical, logical, or a combination thereof. For example, "connection" may be replaced with "access". As used in the disclosure, two elements can be considered to be "connected" or "coupled" to each other using at least one of one or more wires, cables, and printed electric connections, and as some non-limiting and non-inclusive examples, using electromagnetic energy having wavelengths in a radio frequency domain, a microwave region, and a light (both visible and invisible) region, and the like.

The reference signal may be abbreviated as RS, or may be referred to as a pilot according to an applied standard.

As used in the disclosure, the phrase "based on" does not mean "based only on", unless explicitly stated otherwise. In other words, the description "based on" means both "based only on" and "based at least on".

Any reference to elements using designations such as "first", "second", and the like as used in the present disclosure does not generally limit the amount or order of the elements. Such designations may be used in the present disclosure as a convenient way to distinguish between two or more elements. Thus, references to first and second elements do not imply that only two elements may be employed or that the first element must in any way precede the second element.

The "means" in the configuration of each device described above may be replaced with a "unit", a "circuit", a "device", or the like.

When the present disclosure uses the terms "include", "including", and variations thereof, the terms are intended to be inclusive in a manner similar to the term "comprising". Furthermore, the term "or" used in the present disclosure is intended not to be an exclusive OR.

A radio frame may be configured with one or more frames in a time domain. Each of one or more frames in the time domain may be referred to as a sub-frame. The sub-frame may be further configured with one or more slots in the time domain. The sub-frame may be a fixed time length (for example, 1 ms) which is independent of numerology.

The numerology may be a communication parameter applied to at least one of transmission and reception of a signal or a channel. The numerology may indicate at least one of, for example, a sub-carrier spacing (SCS), a bandwidth, a symbol length, a cyclic prefix length, a transmission time interval (TTI), the number of symbols per TTI, a radio frame configuration, a particular filtering operation performed by a transceiver in the frequency domain, a particular windowing operation performed by the transceiver in the time domain, and the like.

The slot may be configured with one or a plurality of symbols (an orthogonal frequency division multiplexing (OFDM) symbol, a single carrier frequency division multiple access (SC-FDMA) symbol, and the like) in the time domain. The slot may be a time unit based on the numerology.

The slot may include a plurality of mini-slots. Each mini-slot may be configured with one or more symbols in the time domain. Further, the mini-slot may be referred to as a sub-slot. The mini-slot may be configured with a smaller number of symbols than the slot. PDSCH (or PUSCH) transmitted in a time unit larger than the mini-slot may be referred to as a PDSCH (or PUSCH) mapping type A. PDSCH (or PUSCH) transmitted using the mini-slot may be referred to as a PDSCH (or PUSCH) mapping type B.

Each of the radio frame, the sub-frame, the slot, the mini-slot, and the symbol represents a time unit when a signal is transmitted. Different names respectively corresponding to the radio frame, the sub-frame, the slot, the mini-slot, and the symbol may be used.

For example, one sub-frame may be referred to as a transmission time interval (TTI), a plurality of consecutive sub-frames may be referred to as a TTI, and one slot or one mini-slot may be referred to as a TTI. That is, at least one of the sub-frame and the TTI may be a sub-frame (1 ms) in existing LTE, a period shorter than 1 ms (for example, 1 to 13 symbols), or a period longer than 1 ms. Note that the unit representing the TTI may be referred to as the slot, the mini-slot, or the like instead of the sub-frame.

Here, the TTI refers to, for example, a minimum time unit of scheduling in wireless communication. For example, in the LTE system, the base station performs scheduling of allocating radio resources (frequency bandwidth, transmission power, and the like that can be used in each terminal 20) to each terminal 20 in units of TTIs. Note that the definition of the TTI is not limited thereto.

The TTI may be a transmission time unit such as a channel coded data packet (a transport block), a code block, or a code word, or may be a processing unit such as scheduling or link adaptation. Note that, when a TTI is given, a time interval (for example, the number of symbols) in which the transport block, the code block, the code word, or the like is actually mapped may be shorter than the TTI.

Note that, when one slot or one mini-slot is referred to as the TTI, one or more TTIs (that is, one or more slots or one or more mini-slots) may be the minimum time unit of scheduling. Furthermore, the number of slots (the number of mini-slots) configuring the minimum time unit of the scheduling may be controlled.

A TTI with a time length of 1 ms may be referred to as a general TTI (TTI in LTE Rel. 8 to 12), a normal TTI, a long TTI, a general sub-frame, a normal sub-frame, a long sub-frame, a slot, or the like. A TTI shorter than the general TTI may be referred to as a shortened TTI, a short TTI, a partial TTI (or fractional TTI), a shortened sub-frame, a short sub-frame, a mini-slot, a sub-slot, a slot, or the like.

Note that the long TTI (for example, the general TTI, the sub-frame, or the like) may be replaced with a TTI having a time length exceeding 1 ms, and the short TTI (for example, the shortened TTI or the like) may be replaced with a TTI having a TTI length less than the TTI length of the long TTI and a length of 1 ms or more.

The resource block (RB) is a resource allocation unit in the time domain and the frequency domain, and may include one or a plurality of consecutive sub-carriers in the frequency domain. The number of sub-carriers included in the RB may be the same regardless of the numerology, and for example, may be 12. The number of sub-carriers included in the RB may be determined based on the numerology.

In addition, the time domain of the RB may include one or more symbols, and may be a length of one slot, one mini-slot, one sub-frame, or one TTI. Each of one TTI, one sub-frame, and the like may be configured with one or more resource blocks.

Note that one or a plurality of RBs may be referred to as a physical resource block (PRB), a sub-carrier group (SCG), a resource element group (REG), a PRB pair, an RB pair, or the like.

Furthermore, the resource block may include one or a plurality of resource elements (REs). For example, one RE may be a radio resource area of one sub-carrier and one symbol.

A bandwidth part (BWP) (which may also be referred to as partial bandwidth or the like) may represent a subset of contiguous common resource blocks (common RBs) for a numerology in a carrier. Here, the common RB may be specified by an index of the RB based on the common reference point of the carrier. The PRB may be defined by a certain BWP and numbered within the BWP.

The BWP may include a BWP for UL (UL BWP) and a BWP for DL (DL BWP). One or a plurality of BWPs may be set in one carrier for the terminal 20.

At least one of the set BWPs may be active, and the terminal 20 may not assume that a predetermined signal/channel is transmitted and received outside the active BWPs. Note that a "cell", a "carrier", and the like in the present disclosure may be replaced with "BWP".

The above-described structures such as the radio frame, the sub-frame, the slot, the mini-slot, and the symbol are merely examples. For example, the number of sub-frames included in the radio frame, the number of slots per subframe or radio frame, the number of mini-slots included in the slot, the number of symbols and RBs included in the slot or the mini-slot, the number of sub-carriers included in the RB, the number of symbols in the TTI, a symbol length, a cyclic prefix (CP) length, and the like can be variously changed.

In the present disclosure, for example, when articles such as a, an, and the in English are added by translation, the present disclosure may include a case in which a noun following the articles is a plural form.

In the present disclosure, the term "A and B are different" may mean "A and B are different from each other". Note that the term may mean that "A and B are different from C". Terms such as "separated" and "coupled" may be interpreted in the same manner as "different".

Each aspect/embodiment described in the present disclosure may be used alone, used in combination, or used by being switched with execution. Furthermore, indication of predetermined information (for example, indication of "being X") is not limited to being performed explicitly, and may be performed implicitly (for example, the predetermined information is not indicated).

Although the present disclosure has been described in detail above, it is apparent to those skilled in the art that the present disclosure is not limited to the embodiments described in the present disclosure. The present disclosure can be implemented as modifications and variations without departing from the spirit and scope of the present disclosure defined by the claims. Therefore, description of the present disclosure is given for the purpose of illustration and does not have any restrictive meaning to the present disclosure.

Reference Signs List

10      base station

| 110 | transmission unit |
|---|---|
| 120 | reception unit |
| 130 | configuration unit |
| 140 | control unit |
| 20 | terminal |
| 210 | transmission unit |
| 220 | reception unit |
| 230 | configuration unit |
| 240 | control unit |
| 1001 | processor |
| 1002 | storage device |
| 1003 | auxiliary storage device |
| 1004 | communication device |
| 1005 | input device |
| 1006 | output device |
| 2001 | vehicle |
| 2002 | drive unit |
| 2003 | steering unit |
| 2004 | accelerator pedal |
| 2005 | brake pedal |
| 2006 | shift lever |
| 2007 | front wheel |
| 2008 | rear wheel |
| 2009 | axle |
| 2010 | electronic control unit |
| 2012 | information service unit |
| 2013 | communication module |
| 2021 | current sensor |
| 2022 | rotation speed sensor |
| 2023 | air pressure sensor |
| 2024 | vehicle speed sensor |
| 2025 | acceleration sensor |
| 2026 | brake pedal sensor |
| 2027 | shift lever sensor |
| 2028 | object detection sensor |
| 2029 | accelerator pedal sensor |
| 2030 | driving assistance system unit |
| 2031 | microprocessor |
| 2032 | memory (ROM, RAM) |
| 2033 | communication port (IO port) |

**Claims**

1. A terminal comprising:

   a control unit configured to identify, based on a parameter specifying information related to a resource in a frequency domain, a configuration of a resource pool in an unlicensed band;
   a reception unit configured to receive a signal from another terminal in the resource pool; and
   a transmission unit configured to transmit a signal to the another terminal in the resource pool,
   wherein the control unit configures an intra-cell guard band in the resource pool based on the parameter.

2. The terminal according to claim 1, wherein the control unit configures the intra-cell guard band in the resource pool based on the parameter defined in specifications, or configures the intra-cell guard band in the resource pool based on the parameter configured by signaling.

3. The terminal according to claim 1, wherein the control unit determines that resources in the frequency domain obtained by excluding the intra-cell guard band from the resource pool as being actually available resources.

4. The terminal according to claim 1, wherein the control unit identifies a start position, a length, and an end position of the intra-cell guard band in the frequency domain based on the parameter.

5. The terminal according to claim 1, wherein the control unit does not assume that a sub-channel that partially or entirely overlaps the intra-cell guard band is used.

6. A communication method of causing a terminal to execute:

   a control step of identifying, based on a parameter specifying information related to a resource in a frequency domain, a configuration of a resource pool in an unlicensed band;
   a reception step of receiving a signal from another terminal in the resource pool; and
   a transmission step of transmitting a signal to the another terminal in the resource pool; and
   a step of configuring an intra-cell guard band in the resource pool based on the parameter.

# FIG.1

V2V
(Vehicle to Vehicle)

V2I
(Vehicle to Infrastructure)

Road side unit (RSU)

V2N
(Vehicle to Network)

ITS server

V2P
(Vehicle to Pedestrian)

# FIG.2

EP 4 503 810 A1

FR2
{60, 120, (240)}
kHz SCS

FR1
{15, 30, 60} kHz SCS
5～100 MHz BW

50～400 MHz BW        Above 52.6 GHz

FREQUENCY

0.41    1                          7.125    10          24.25          52.6            71
GHz   GHz                          GHz     GHz         GHz           GHz            GHz

# FIG.3

OPERATION CHANNEL
(LBT BANDWIDTH)

# FIG.4

SENSING SLOT
(E.G., 9 $\mu$s)

DEFER DURATION
(E.G., 43 $\mu$s)

IF AN ERROR DUE TO COLLISION IS DETECTED,
CONTENTION WINDOW SIZE IS EXPANDED

NR-U gNB

6 5 4 3 2 1 0          3 2 1 0          13 13   TIME

WIRELESS LAN
NODE #1

10 9 8 7 6 5 4 4          4 3 2 1 1          0   TIME

WIRELESS LAN
NODE #2

9 8 7 6 5 4 3 3          3 2 1 0          7 7   TIME

BACK-OFF COUNTER IS FIXED
DURING THE CHANNEL-BUSY STATE

NR-U
TRANSMISSION

WIRELESS LAN
TRANSMISSION

LBT BUSY

LBT IDLE

EP 4 503 810 A1

# FIG.5

| ANOTHER TRANSMISSION | //////// | TRANSMISSION |

TIME

GAP OF 16 $\mu$s OR 25 $\mu$s
FOR POWER DETECTION

# FIG.6

MAXIMUM 584 $\mu$s

| ANOTHER TRANSMISSION | //////// | TRANSMISSION |

TIME

GAP NOT EXCEEDING 16 $\mu$s
WITHOUT POWER DETECTION

# FIG.7

| CHANNEL n | CHANNEL n+1 | CHANNEL n+2 |
|---|---|---|
| PERFORM TYPE1 LBT WITH CW_P_n | PERFORM TYPE1 LBT WITH CW_P_n+1 | PERFORM TYPE1 LBT WITH CW_P_n+2 |

CW_P_n, CW_P_n+1, AND CW_P_n+2 ARE EACH DETERMINED INDEPENDENTLY

# FIG.8

| CHANNEL n | CHANNEL n+1 | CHANNEL n+2 |
| --- | --- | --- |

PERFORM
TYPE1 LBT
WITH CW_P_max

PERFORM
TYPE1 LBT
WITH CW_P_max

PERFORM
TYPE1 LBT
WITH CW_P_max

CW_P_max IS
MAXIMUM VALUE
AMONG
CW_P_n,
CW_P_n+1, AND
CW_P_n+2

# FIG.9

RANDOMLY DETERMINED OR PERIODICALLY SELECTED
WITH PERIODICITY OF ONE OR MORE SECONDS

⇩

| CHANNEL n | CHANNEL n+1 | CHANNEL n+2 |
|-----------|-------------|-------------|

PERFORM TYPE1 LBT WITH CW_P

# FIG.10

RANDOMLY DETERMINED OR PERIODICALLY SELECTED
WITH PERIODICITY OF ONE OR MORE SECONDS

⇩

| CHANNEL n | CHANNEL n+1 | CHANNEL n+2 |
|-----------|-------------|-------------|

| PERFORM TYPE2A LBT | PERFORM TYPE1 LBT WITH CW_P | PERFORM TYPE2A LBT |
|--------------------|------------------------------|--------------------|

# FIG.11

EP 4 503 810 A1

**FIG.12**

| | |
|---|---|
| ▦ RESOURCE WHERE SCI IS DETECTED AND RSRP EXCEEDS THRESHOLD | ▩ EXCLUDED RESOURCE |
| ▦ RESOURCE WHERE SCI IS DETECTED AND RSRP IS BELOW THRESHOLD | ▩ RESOURCE WHERE CANDIDATE BASED ON RESOURCE RESERVATION FIELD IS EXCLUDED BECAUSE RESOURCE IN SENSING WINDOW IS NOT MONITORED |
| ▨ RESOURCE NOT MONITORED (FOR EXAMPLE, DUE TO TRANSMISSION) | ▨ RESOURCE NOT EXCLUDED BECAUSE RSRP OF RESOURCE OF SENSING WINDOW IS BELOW THRESHOLD |
| ■ SELECTED RESOURCE | ▥ RESOURCE CANDIDATE |

1 PERIOD (10240 ms)

SENSING WINDOW  RESOURCE SELECTION WINDOW  RESOURCE POOL

SUB-CHANNEL

TRANSMISSION OF PRIORITY $p_{RX}$ OF ANOTHER UE

PRIORITY $p_{TX}$

TRIGGER

SLOT

$t_0^{SL}$   $n - T_0$   $t_m^{SL}$   $n - T_{proc,0}$   $n$   $n + T_1$   $n + T_2$   $t_{T_{max}-1}^{SL}$

PERFORM LBT IN LBT BAND INCLUDING THE SELECTED RESOURCE

# FIG.13

**Legend:**
- 1st-stage SCI (PSCCH)
- 2nd-stage SCI (PSSCH)
- DMRS
- SL-SCH (PSSCH)

2 OR 3 SYMBOLS

{10, 12, 15, 20, 25} PRBs

PRB

SUB-CHANNEL

SLOT

SUB-CARRIER

SUB-CARRIER

COPY FOR AGC

SYMBOL

GAP FOR SWITCHING BETWEEN TRANSMISSION AND RECEPTION

EP 4 503 810 A1

# FIG.14

RB SET

nrofCRB

startCRB

SL RESOURCE (RESOURCE POOL)

GUARD BAND

# FIG.15

Legend:
- 1st-stage SCI (PSCCH)
- 2nd-stage SCI (PSSCH)
- DMRS
- SL-SCH (PSSCH)

2 OR 3 SYMBOLS

{10, 12, 15, 20, 25} PRBs

PRB

SUB-CHANNEL

#1 #2 #3 #4 #5 #6 #7 #8 #9 #10 #11 #12 #13 #14

COPY FOR AGC

SYMBOL

GAP FOR SWITCHING BETWEEN TRANSMISSION AND RECEPTION

# FIG.16

_/10

_/110
TRANSMISSION UNIT

_/130
CONFIGURATION UNIT

_/120
RECEPTION UNIT

_/140
CONTROL UNIT

# FIG.17

_/20

_/210
TRANSMISSION UNIT

_/230
CONFIGURATION UNIT

_/220
RECEPTION UNIT

_/240
CONTROL UNIT

# FIG.18

~ 10, 20

~ 1001

PROCESSOR

1007

~ 1004

COMMUNICATION
DEVICE

~ 1002

STORAGE
DEVICE

~ 1005

INPUT DEVICE

~ 1003

AUXILIARY
STORAGE
DEVICE

~ 1006

OUTPUT DEVICE

FIG.19

## INTERNATIONAL SEARCH REPORT

International application No.

**PCT/JP2022/016343**

**A.    CLASSIFICATION OF SUBJECT MATTER**

*H04W 72/0453*(2023.01)i; *H04W 4/40*(2018.01)i

FI:    H04W72/04 132; H04W4/40

According to International Patent Classification (IPC) or to both national classification and IPC

**B.    FIELDS SEARCHED**

Minimum documentation searched (classification system followed by classification symbols)

H04W72/04; H04W4/40

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

**C.    DOCUMENTS CONSIDERED TO BE RELEVANT**

| Category* | Citation of document, with indication, where appropriate, of the relevant passages | Relevant to claim No. |
|---|---|---|
| X | WO 2022/029965 A1 (NTT DOCOMO, INC.) 10 February 2022 (2022-02-10) paragraphs [0035]-[0037], [0051]-[0057], [0083], [0100], [0107], [0166] | 1-2, 4, 6 |
| Y | | 3, 5 |
| Y | WO 2018/021008 A1 (NEC CORP.) 01 February 2018 (2018-02-01) paragraph [0057] | 3 |
| Y | MODERATOR (LENOVO). Summary of email discussion [100b-e-NR-unlic-NRU-DL_ Signals_and_Channels-02] on available RB set indication and COT duration. 3GPP TSG RAN WG1 #100b_e R1-2002787, 01 May 2020 1.2 Intra-cell guardband between adjacent RB sets | 5 |

☐ Further documents are listed in the continuation of Box C.    ☑ See patent family annex.

| | |
|---|---|
| *    Special categories of cited documents: | "T"    later document published after the international filing date or priority date and not in conflict with the application but cited to understand the principle or theory underlying the invention |
| "A"    document defining the general state of the art which is not considered to be of particular relevance | |
| "E"    earlier application or patent but published on or after the international filing date | "X"    document of particular relevance; the claimed invention cannot be considered novel or cannot be considered to involve an inventive step when the document is taken alone |
| "L"    document which may throw doubts on priority claim(s) or which is cited to establish the publication date of another citation or other special reason (as specified) | "Y"    document of particular relevance; the claimed invention cannot be considered to involve an inventive step when the document is combined with one or more other such documents, such combination being obvious to a person skilled in the art |
| "O"    document referring to an oral disclosure, use, exhibition or other means | |
| "P"    document published prior to the international filing date but later than the priority date claimed | "&"    document member of the same patent family |

| Date of the actual completion of the international search | Date of mailing of the international search report |
|---|---|
| **24 October 2022** | **08 November 2022** |

| Name and mailing address of the ISA/JP | Authorized officer |
|---|---|
| **Japan Patent Office (ISA/JP)** **3-4-3 Kasumigaseki, Chiyoda-ku, Tokyo 100-8915 Japan** | |
| | Telephone No. |

Form PCT/ISA/210 (second sheet) (January 2015)

**INTERNATIONAL SEARCH REPORT**
Information on patent family members

International application No.

**PCT/JP2022/016343**

| Patent document cited in search report | | | Publication date (day/month/year) | Patent family member(s) | | | Publication date (day/month/year) |
|---|---|---|---|---|---|---|---|
| WO | 2022/029965 | A1 | 10 February 2022 | (Family: none) | | | |
| WO | 2018/021008 | A1 | 01 February 2018 | US paragraph [0117] JP | 2019/0268198 2021-168482 | A1 A | |

Form PCT/ISA/210 (patent family annex) (January 2015)

**REFERENCES CITED IN THE DESCRIPTION**

**Non-patent literature cited in the description**

- *3GPP TS 38.211 V16.8.0*, December 2021
- *3GPP TR 22.886 V15.1.0*, March 2017
- *3GPP TS 38.306 V16.7.0*, December 2021
- *3GPP TS 37.213 V16.7.0*, December 2021
- *3GPP TS 38.331 V16.7.0*, December 2021
- *3GPP TS 38.214 V16.8.0*, December 2021
- *3GPP TS 38.101-1 V16.10.0*, December 2021
- *3GPP TS 38.321 V16.7.0*, December 2021